(19) Europäisches Patentamt
European Patent Office
Office européen des brevets

(11) **EP 4 220 800 A1**

(12) **EUROPEAN PATENT APPLICATION**
published in accordance with Art. 153(4) EPC

(43) Date of publication:
**02.08.2023 Bulletin 2023/31**

(21) Application number: **21872883.0**

(22) Date of filing: **17.09.2021**

(51) International Patent Classification (IPC):
**H01M 10/0562** (2010.01)    **H01B 1/06** (2006.01)
**C01B 25/14** (2006.01)    **H01M 10/052** (2010.01)

(52) Cooperative Patent Classification (CPC):
**C01B 25/14; H01B 1/06; H01M 10/052;**
**H01M 10/0562;** Y02E 60/10

(86) International application number:
**PCT/KR2021/012904**

(87) International publication number:
**WO 2022/065855 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.09.2020 KR 20200122436**

(71) Applicant: **Samsung SDI Co., Ltd.**
**Yongin-si, Gyeonggi-do 17084 (KR)**

(72) Inventors:
• **LEE, Seok Soo**
  **Suwon-si, Gyeonggi-do 16678 (KR)**
• **KU, Jun Hwan**
  **Suwon-si, Gyeonggi-do 16678 (KR)**

(74) Representative: **Gulde & Partner**
**Patent- und Rechtsanwaltskanzlei mbB**
**Wallstraße 58/59**
**10179 Berlin (DE)**

(54) **SOLID ION CONDUCTOR COMPOUND, SOLID ELECTROLYTE CONTAINING SAME, ELECTROCHEMICAL CELL COMPRISING SAME, AND MANUFACTURING METHOD THEREFOR**

(57)    Disclosed herein are a solid ion conductor compound includinga compound that is represented by Formula 1 and has an argyrodite-type crystal structure, an ion conductivity of 3 mS/cm or more at 25 °C, and an average particle diameter of 0.1 $\mu$m to 7 $\mu$m, a solid electrolyte including the solid ion conductor compound, an electrochemical cell including the solid ion conductor compound, and a method of preparing the solid ion conductor compound.

<Formula 1>        $Li_aM1_xPS_yM2_zM3_w$

In Formula 1,
M1 is at least one metal element selected from Group 1 to 15 elements, except for Li, in the Periodic Table,
M2 is at least one element selected from Group 17 elements in the Periodic Table,
M3 is$SO_n$, and
$4\leq a\leq8$, $0\leq x<1$, $3\leq y\leq7$, $0<z\leq2$, $0\leq w<2$, $1.5\leq n\leq5$, and $0<x+w<3$.

EP 4 220 800 A1

# FIG. 1

**Description**

TECHNICAL FIELD

The present disclosure relates to solid ion conductor compounds, solid electrolytes including the same, lithium batteries including the same, and methods of preparing the same.

BACKGROUND ART

An all-solid lithium battery includes a solid electrolyte as an electrolyte. Since an all-solid lithium battery does not include a flammable organic solvent, it has excellent stability.

Solid electrolyte materials of the related art are pulverized to have an average particle diameter in a certain range and used for application in an all-solid lithium battery.

DESCRIPTION OF EMBODIMENTS

TECHNICAL PROBLEM

Provided are solid ion conductor compounds having both reduced particle diameter and improved lithium ion conductivity.

Provided are solid electrolytes including the solid ion conductor compounds.

Provided are electrochemical cells including the solid ion conductor compounds.

Provided are methods of preparing the solid ion conductor compounds.

Additional aspects will be set forth in part in the description which follows and, in part, will be apparent from the description, or may be learned by practice of the presented embodiments of the disclosure.

According to an aspect of an embodiment,

a solid ion conductor compound include: a compound represented by Formula 1,
wherein the compound has an argyrodite type crystal structure,
has an ion conductivity of 3 mS/cm or more at 25 °C, and
has an average particle diameter of 0.1 $\mu$m to 7 $\mu$m,

$$<\text{Formula 1}> \quad \text{Li}_a\text{M1}_x\text{PS}_y\text{M2}_z\text{M3}_w$$

wherein, in Formula 1,
M1 is at least one metal element selected from Group 1 to 15 elements, except for Li, in the Periodic Table,
M2 is at least one element selected from Group 17 elements in the Periodic Table,
M3 is $SO_n$, and
$4 \leq a \leq 8$, $0 \leq x < 1$, $3 \leq y \leq 7$, $0 < z \leq 2$, $0 \leq w < 2$, $1.5 \leq n \leq 5$, and $0 < x+w < 3$.

According to an aspect of another embodiment,
a solid electrolyte includes the solid ion conductor compound.

According to an aspect of another embodiment, an electrochemical cell includes:

a cathode layer including a cathode active material layer;
an anode layer including an anode active material layer; and
an electrolyte layer between the cathode layer and the anode layer,
wherein at least one of the cathode active material layer and the electrolyte layer includes the aforementioned solid ion conductor compound.

According to an aspect of another embodiment,

a method of preparing a solid ion conductor compound includes: providing different kinds of precursor compounds having an average particle diameter of 7 $\mu$m or less, respectively;
mixing the different kinds of precursor compounds with each other to prepare a mixture; and
heat-treating the mixture to prepare a solid ion conductor compound,
wherein the solid ion conductor compound has an average particle diameter of 7 $\mu$m or less.

BRIEF DESCRIPTION OF DRAWINGS

The above and other aspects, features, and advantages of certain embodiments of the disclosure will be more apparent from the following description taken in conjunction with the accompanying drawings, in which:

FIG. 1 illustrates powder XRD spectra of solid ion conductor compounds prepared in Examples 1 to 3, Comparative Example 1, and Comparative Example 4;
FIG. 2 is a graph of particle size distribution of a lithium precursor, a phosphorus (P) precursor, a chlorine precursor, and a precursor mixture used in Example 1;
FIG. 3 is a graph of particle size distribution of solid ion conductor compounds prepared in Example 1, Comparative Example 1, and Comparative Example 4;
FIG. 4 is graph of particle size distribution of solid ion conductor compounds prepared in Examples 1 to 3;
FIG. 5 is a graph showing the lifetime characteristics and discharge capacities of all-solid secondary batteries manufactured in Examples 4 to 6 and Comparative Example 10;
FIG. 6 is a schematic view of an all-solid secondary battery according to an embodiment;
FIG. 7 is a schematic view of an all-solid secondary battery according to another embodiment; and
FIG. 8 is a schematic view of an all-solid secondary battery according to another embodiment.

<Explanation of Reference numerals designating the Major Elements of the Drawings>

| | | | |
|---|---|---|---|
| 1, 1a: | Solid secondary battery | 10: | Cathode |
| 11: | Cathode current collector | 12: | Cathode active material layer |
| 20: | Anode | 21: | Anode current collector |
| 22: | Anode active material layer | 23: | Metal layer |
| 30: | Solid electrolyte layer | 40: | All-solid secondary battery |

MODE OF DISCLOSURE

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Various embodiments are illustrated in the attached drawings. However, the present inventive concept may be embodied in many different forms, and should not be construed as being limited to the embodiments described herein. Rather, these embodiments are provided such that the present disclosure may be made thorough and complete, and will sufficiently transfer the scope of the present creative step to those skilled in the art. The same reference numerals designate the same components.

When a component is mentioned to be placed "on" another component, it will be understood that it can be directly on another component or that another component may be interposed therebetween. In contrast, when a component is mentioned to be "directly on" another component, another component is not interposed therebetween.

Although the terms "first", "second", "third", etc., may be used herein to describe various elements, components, regions, and/or layers, these elements, components, regions, and/or layers should not be limited by these terms. These terms are only used to distinguish one element, component, region, layer or region from another element, component, region, layer or region. Accordingly, a first component, component, a first area, a first layer or a first region described below may be referred to as a second component, a second element, a second area, a second layer or a second region without departing from the teachings of this specification.

The terms used in this specification are for describing only specific embodiments and are not intended to limit the present inventive step. The singular form as used herein is intended to include the plural form including "at least one" unless the content clearly dictates otherwise. "At least one" should not be construed as limiting to the singular form. As used herein, the term "and/or" includes any and all combinations of one or more of the list items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Spatially relative terms such as "beneath", "under", "below", "on", "over", "above", etc. may be used herein to easily describe the relationship of one component or feature to another component or feature. It will be understood that spatially relative terms are intended to encompass different directions of a device in use or operation in addition to the directions shown in the drawings. For example, if the device in the drawings is turned over, a component described as "beneath" or "under" will be oriented "over" the other component or feature. Thus, the exemplary term "below" may encompass both an upward and downward direction. The device may be placed in different directions (rotated 90° or rotated in different directions), and spatially relative terms as used herein may be interpreted accordingly.

Unless otherwise defined, all terms (including technical and scientific terms) used in this specification have the same meaning as those commonly understood by a person skilled in the art to which this disclosure belongs. In addition, it will also be understood that terms as defined in a commonly used dictionary should be construed as having a meaning consistent with their meaning within the context of the relevant technology and the present disclosure, and should not be interpreted as an idealized or excessively formal meaning.

Exemplary ideal embodiments of the present disclosure will be described with reference to schematic cross-sectional views As such, deformations from the shape of the component should be expected as a result of, for example, manufacturing techniques and/or tolerances. Accordingly, embodiments described herein should not be construed as being limited to the specific shapes of regions as shown herein, but should include variations in shapes resulting from manufacturing, for example. For example, an area shown or described as being flat may typically have rough and/or non-linear characteristics. Moreover, the sharply drawn angles may be round. Accordingly, the regions shown in the drawings are schematic in nature, and their shapes are not intended to show the exact shape of the region, and are not intended to limit the scope of the present claims.

The "group" means a group of the periodic table of elements according to Group 1-18 Family Classification System of the International Federation of Pure and Applied Chemistry ("IUPAC").

In this specification, the "particle diameter" of particles indicates an average diameter when the particles are spherical and indicates an average long axis length when the particles are non-spherical. The particle diameter of particles may be measured using a particle size analyzer (PSA). The "particle diameter" of particles is, for example, an average particle diameter. The "average particle diameter" is, for example, D50, which is a median particle diameter.

D50 is a particle size of particles corresponding to 50% cumulative volume calculated from particles having a small particle size in the particle size distribution measured by a laser diffraction method.

D90 is a particle size of particles corresponding to 90% cumulative volume calculated from particles having a small particle size in the particle size distribution measured by a laser diffraction method.

D10 is a particle size of particles corresponding to 10% cumulative volume calculated from particles having a small particle size in the particle size distribution measured by a laser diffraction method.

While specific embodiments have been described, alternatives, modifications, variations, improvements, and substantial equivalents that are currently unexpected or unforeseeable may occur to the applicant or those skilled in the art. Accordingly, it is intended that the appended claims, which may be filed and amended, include all such alternatives, modifications, variations, improvements and substantial equivalents.

Hereinafter, a solid ion conductor compound according to an embodiment, a solid electrolyte including the solid ion conductor compound, an electrochemical cell including the solid ion conductor compound, and a method of preparing the solid ion conductor compound will be described in more detail.

[Solid ion conductor compound]

A solid ion conductor compound according to an embodiment is represented by Formula 1, has an argyrodite type crystal structure, has an ion conductivity of 3 mS/cm or more at 25 °C, and has an average particle diameter of 0.1 $\mu$m to 7 $\mu$m.

<Formula 1> $Li_aM1_xPS_yM2_zM3_w$

in Formula 1,

M1 is at least one metal element selected from Group 1 to 15 elements, except for Li, in the Periodic Table,
M2 is at least one element selected from Group 17 elements in the Periodic Table,
M3 is $SO_n$, and
$4 \leq a \leq 8$, $0 \leq x < 1$, $3 \leq y \leq 7$, $0 < z \leq 2$, $0 \leq w < 2$, $1.5 \leq n \leq 5$, and $0 < x+w < 3$.

For example, $5 \leq a \leq 8$, $0 \leq x \leq 0.7$, $4 \leq y \leq 7$, $0 < z \leq 2$, and $0 \leq w \leq 50.5$. For example, $5 \leq a \leq 7$, $0 \leq x \leq 0.5$, $4 \leq y \leq 6$, $0 < z \leq 2$, and $0 \leq w \leq 0.2$. For example, $5.5 \leq a \leq 7$, $0 \leq x \leq 0.3$, $4.5 \leq y \leq 6$, $0.2 \leq z \leq 1.8$, and $0 \leq w \leq 0.1$. For example, $5.5 \leq a \leq 7$, $0 \leq x \leq 0.1$, $4.5 \leq y \leq 6$,

0.5≤z≤1.8, and 0≤w≤0.1. For example, 5.5≤a≤7, 0≤x≤0.05, 4.5≤y≤6, 1.0≤z≤1.8, and 0≤w≤0.1.

The compound represented by Formula 1 is, for example, a crystalline compound having a crystal structure, and includes M and/or Me at a part of a lithium site in the crystal structure, so that the ion conductivity of lithium ions in the compound may be improved, and activation energy may be reduced. For example, other ions having the same oxidation number as lithium and having an ion radius equal to or greater than that of lithium ions may be arranged in some of the lithium sites included in the solid ion conductor compound represented by Formula 1, so that a crystal lattice volume may increase. Due to an increase in the crystal lattice volume, the movement of lithium ions in the crystal lattice may become easy. Further, for example, other ions having an oxidation number of 2 or greater than that of lithium ions may be arranged in some of the lithium sites included in the solid ion conductor compound represented by Formula 1, so that some of the lithium sites may become vacant sites. Due to the presence of vacant sites in the crystal lattice, the movement of lithium ions in the crystal lattice may become easy. In Formula 1, for example, M1 may be a monovalent cation or a divalent cation. In Formula 1, particularly, M1 may be a monovalent cation.

The average particle diameter of the compound represented by Formula 1 is, for example, 0.3 $\mu$m to 7 $\mu$m, 0.4 $\mu$m to 6 $\mu$m, 0.5 $\mu$m to 5 $\mu$m, 0.5 $\mu$m to 4 $\mu$m, or 0.5 $\mu$m to 3 $\mu$m. Since the solid ion conductor compound has a particle diameter within this range, it may be suitably used for a cathode layer of an all-solid secondary battery. Accordingly, the cycle characteristics of an all-solid secondary battery employing a cathode layer containing such a solid ion conductor compound may be further improved.

The average particle diameter of the compound represented by Formula 1 is, for example, 1$\mu$m to 7 $\mu$m, 1$\mu$m to 6 $\mu$m, 1$\mu$m to 5 $\mu$m, or 2$\mu$m to 4 $\mu$m. Since the solid ion conductor compound has a particle diameter within this range, it may be suitably used for a solid electrolyte layer of an all-solid secondary battery. Accordingly, the cycle characteristics of an all-solid secondary battery employing a solid electrolyte layer containing such a solid ion conductor compound may be further improved.

The D90 - D10 value of the compound represented by Formula 1 is, for example, 1$\mu$m to 30 $\mu$m, 1 $\mu$m to 25 $\mu$m, 1 $\mu$m to 20 $\mu$m, 1 $\mu$m to 15 $\mu$m, 1 $\mu$m to 10 $\mu$m, 1 $\mu$m to 9 $\mu$m, 1 $\mu$m to 8 $\mu$m, 1 $\mu$m to 7 $\mu$m, or 1 $\mu$m to 6 $\mu$m. Since the solid ion conductor compound has a D90 - D10 value within this range, it may be suitably used for a solid electrolyte layer of an all-solid secondary battery. Accordingly, the cycle characteristics of an all-solid secondary battery employing a solid electrolyte layer containing such a solid ion conductor compound may be further improved.

The ion conductivity of the compound represented by Formula 1 at 25°C is, for example, 3 mS/cm to 100 mS/cm, 3 mS/cm to 50 mS/cm, 3 mS/cm to 40 mS/cm, 3 mS/cm to 30 mS/cm, 3 mS/cm to 20 mS/cm, or3 mS/cm to 10 mS/cm. Since the solid ion conductor compound has ion conductivity within this range, ion transfer between a cathode and an anode in an electrochemical cell including such a solid ion conductor compound may be effectively performed to decrease an internal resistance between the cathode and the anode. The ionic conductivity may be measured using a DC polarization method. Alternatively, the ionic conductivity may be measured using a complex impedance method.

In the solid ion conductor compound represented by Formula 1, for example, M1 may include Na, K, Cu, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M1 may be, for example, a monovalent cation or a divalent cation.

In the solid ion conductor compound represented by Formula 1, for example, M1 may include Na, K, Cu, Mg, Ag, or a combination thereof. M1 may be, for example, a monovalent cation.

In the solid ion conductor compound represented by Formula 1, for example, M2 may include F, Cl, Br, I, or a combination thereof. M2 may be, for example, a monovalent anion.

In the solid ion conductor compound represented by Formula 1, for example, $SO_n$ of M3 may be $S_4O_6$, $S_3O_6$, $S_2O_3$, $S_2O_4$, $S_2O_5$, $S_2O_6$, $S_2O_7$, $S_2O_6$, $SO_4$, $SO_5$, or a combination thereof. $SO_n$ may be, for example, a divalent anion. $SO_n$ may be, for example, S4O62-, S3O62-, S2O32-, S2O42-, S2O52-, S2O62-, S2O72-, S2O82-SO42-, SO52-, or a combination thereof.

The solid ion conductor compound of represented by Formula 1 may be, for example, solid ion conductor compounds represented by Formulas 1a to 1c:

<Formula 1a>$\qquad Li_a M1_x PS_y M2_z$

in Formula 1a,

M1 is at least one metal element selected from Group 1 to 15 elements, except for Li, in the Periodic Table,
M2 is at least one element selected from Group 17 elements in the Periodic Table, and
$4 \leq a \leq 8$, $0 < x < 1$, $3 \leq y \leq 7$, and $0 < z \leq 2$.

The solid ion conductor compound represented by Formula 1a is a compound including M1 and M2 and not including M3.

<Formula 1b> $Li_aM1_xPS_yM2_zM3_w$

in Formula 1b,

M1 is at least one metal element selected from Group 1 to 15 elements, except for Li, in the Periodic Table,
M2 is at least one element selected from Group 17 elements in the Periodic Table,
M3 is $SO_n$, and
$4 \leq a \leq 8$, $0 < x < 1$, $3 \leq y \leq 7$, $0 < z \leq 2$, $0 < w < 2$, and $1.5 \leq n \leq 5$.

The solid ion conductor compound represented by Formula 1b is a compound including all of M1, M2 and M3.

<Formula 1c> $Li_aPS_yM2_zM3_w$

in Formula 1c,

M2 is at least one element selected from Group 17 elements in the Periodic Table,
M3 is $SO_n$, and
$4 \leq a \leq 8$, $3 \leq y \leq 7$, $0 < z \leq 2$, $0 < w < 2$, and $1.5 \leq n \leq 5$.

The solid ion conductor compound represented by Formula 1c is a compound not including M1 and includingM2 and M3.
The solid ion conductor compound of represented by Formula 1 may be, for example, a solid ion conductor compound represented by Formula 2:

<Formula 2> $Li_{7-m \times v-z}M1_vPS_{6-z-w}M2_zM3_w$

in Formula 2,

M1 is at least one metal element selected from Group 1 to 15 elements, except for Li, in the Periodic Table, m is an oxidation number of M1,
M2 is at least one element selected from Group 17 elements in the Periodic Table,
M3 is $SO_n$, and
$0 \leq v < 1$, $0 < z \leq 2$, $0 < w < 2$, $1.5 \leq n \leq 5$, $1 \leq m \leq 2$, and $0 < v+w < 3$.

For example, $0 \leq v \leq 0.7$, $0 < z \leq 2$, and $0 \leq w \leq 0.5$. For example, $0 \leq v \leq 0.5$, $0 < z \leq 2$, and $0 \leq w \leq 0.2$. For example, $0 \leq v \leq 0.3$, $0.2 \leq z \leq 1.8$, and $0 \leq w \leq 0.1$. For example, $0 \leq v \leq 0.1$, $0.5 \leq z \leq 1.8$, and $0 \leq w \leq 0.1$. For example, $0 \leq v \leq 0.05$, $1.0 \leq z \leq 1.8$, and $0 \leq w \leq 0.1$.
The solid ion conductor compound of represented by Formula 1 may be, for example, solid ion conductor compounds represented by Formulas 2a to 2c:

<Formula 2a> $Li_{7-m-v-z}M1_vPS_{6-z}M2_z$

in Formula 2a,

M1 is at least one metal element selected from Group 1 to 15 elements, except for Li, in the Periodic Table, m is an oxidation number of M1,
M2 is at least one element selected from Group 17 elements in the Periodic Table, and
$0 < v < 1$, $0 < z \leq 2$, and $1 \leq m \leq 2$.

The solid ion conductor compound represented by Formula 2a is a compound including M1 and M2 and not including M3. M1 may be, for example, one kind of metal element or two or more kinds of metal elements.

<Formula 2b> $Li_{7-m-v-z}M1_vPS_{6-z-w}M2_zM3_w$

in Formula 2b,

M1 is at least one metal element selected from Group 1 to 15 elements, except for Li, in the Periodic Table, m is an oxidation number of M1,

M2 is at least one element selected from Group 17 elements in the Periodic Table,
M3 is $SO_n$, and
$0<v<1$, $0<z\leq2$, $0<w<2$, $1.5\leq n\leq5$, and $1\leq m\leq2$.

The solid ion conductor compound represented by Formula 2b is a compound including M1, M2 and M3. M1 may be, for example, one kind of metal element or two or more kinds of metal elements. M2may be, for example, one kind of halogen element or two or more kinds of halogen elements.

$$<\text{Formula 2c}> \qquad Li_{7-z}PS_{6-z-w}M2_zM3_w$$

in Formula 2c,

M2 is at least one element selected from Group 17 elements in the Periodic Table,
M3 is $SO_n$, and
$0<z\leq2$, $0<w<2$, $1.5\leq n\leq5$, and $1\leq m\leq2$.

The solid ion conductor compound represented by Formula 2c is a compound including M2 and M3.
The solid ion conductor compound of represented by Formula 1 may be, for example, a solid ion conductor compound represented by Formula 3:

$$<\text{Formula 3}> \qquad Li_{7-m\times v-z}M4_vPS_{6-z}M5_{z1}M6_{z2}$$

in Formula 3,

M4 is Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m is an oxidation number of M4,
M5 and M6 are each independently F, Cl, Br, or I, and
$0<v<0.7$, $0<z1<2$, $0\leq z2<1$, $0<z<2$, $z=z1+z2$, and $1\leq m\leq2$.

For example, $0<v\leq0.7$, $0<z1<2$, $0\leq z2\leq0.5$, $0<z<2$, and $z=z1+z2$. For example, $0<v\leq0.5$, $0<z1<2$, $0\leq z2\leq0.5$, $0<z<2$, and $z=z1+z2$. For example, $0<v\leq0.3$, $0<z1\leq1.5$, $0\leq z2\leq0.5$, $0.2\leq z\leq1.8$, and $z=z1+z2$. For example, $0<v\leq0.1$, $0<z1\leq1.5$, $0\leq z2\leq0.5$, $0.5\leq z\leq1.8$, and $z=z1+z2$. For example, $0<v\leq0.05$, $0<z1\leq1.5$, $0\leq z2\leq0.2$, $1.0\leq z\leq1.8$, and $z=z1+z2$. M1 may be, for example, one kind of metal element or two kinds of metal elements.
The solid ion conductor compound represented by Formula 3 may include, for example, one kind of halogen element or two kinds of halogen elements.
The solid ion conductor compound represented by Formula 1 may be, for example, solid ion conductor compounds represented by Formulas 3a to 3e:

$$<\text{Formula 3a}> \qquad Li_{7-v-z}Na_vPS_{6-z}M5_{z1}M6_{z2}$$

$$<\text{Formula 3b}> \qquad Li_{7-v-z}K_vPS_{6-z}M5_{z1}M6_{z2}$$

$$<\text{Formula 3c}> \qquad Li_{7-v-z}Cu_vPS_{6-z}M5_{z1}M6_{z2}$$

$$<\text{Formula 3d}> \qquad Li_{7-v-z}Mg_vPS_{6-z}M5_{z1}M6_{z2}$$

$$<\text{Formula 3e}> \qquad Li_{7-v-z}Ag_vPS_{6-z}M5_{z1}M6_{z2},$$

in Formulas 3a to 3e,

M5 and M6 are each independently F, Cl, Br, or I, and
$0<v<0.7$, $0<z1<2$, $0\leq z2<1$, $0<z<2$, and $z=z1+z2$. For example, $0<v\leq0.7$, $0<z1<2$, $0\leq z2\leq0.5$, $0<z<2$, and $z=z1+z2$. For example, $0<v\leq0.5$, $0<z1<2$, $0\leq z2\leq0.5$, $0<z<2$, and $z=z1+z2$. For example, $0<v\leq0.3$, $0<z1\leq1.5$, $0\leq z2\leq0.5$, $0.2\leq z\leq1.8$, and $z=z1+z2$. For example, $0<v\leq0.1$, $0<z1\leq1.5$, $0\leq z2\leq0.5$, $0.5\leq z\leq1.8$, and $z=z1+z2$. For example, , $0<v\leq0.05$, $0<z1\leq1.5$, $0\leq z2\leq0.2$, $1.0\leq z\leq1.8$, and $z=z1+z2$.

The solid ion conductor compound represented by Formula 1 may be, for example, solid ion conductor compounds represented by Formulas:

$Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$,

$Li_{7-v-z}Na_vPS_{6-z}F_{z1}Cl_{z2}$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}F_{z2}$, $Li_{7-v-z}Na_vPS_{6-z}Br_{z1}I_{z2}$, $Li7-v_{-z}Na_vPS_{6-z}Br_{z1}F_{z2}$, $Li_{7-v-z}Na_vPS_{6-z}Br_{z1}Cl_{z2}$, $Li_{7-v-z}Na_vPS_{6-z}I_{z1}F_{z2}$, $Li_{7-v-z}Na_vPS_{6-z}I_{z1}Cl_{z2}$, $Li_{7-v-z}Na_vPS_{6-z}I_{z1}Br_{z2}$,

$Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$,

$Li_{7-v-z}K_vPS_{6-z}F_{z1}Cl_{z2}$, $Li_{7-v-z}K_vPS_{6-z}F_{z1}Br_{z2}$, $Li_{7-v-z}K_vPS_{6-z}F_{z1}I_{z2}$, $Li_{7-v-z}K_vPS_{6-z}Cl_{z1}Br_{z2}$, $Li_{7-v-z}K_vPS_{6-z}Cl_{z1}I_{z2}$, $Li_{7-v-z}K_vPS_{6-z}Cl_{z1}F_{z2}$, $Li_{7-v-z}K_vPS_{6-z}Br_{z1}I_{z2}$, $Li_{7-v-z}K_vPS_{6-z}Br_{z1}F_{z2}$, $Li_{7-v-z}K_vPS_{6-z}Br_{z1}Cl_{z2}$, $Li_{7-v-z}K_vPS_{6-z}I_{z1}F_{z2}$, $Li_{7-v-z}K_vPS_{6-z}I_{z1}Cl_{z2}$, $Li_{7-v-z}K_vPS_{6-z}I_{z1}Br_{z2}$,

$Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$,

$Li_{7-v-z}Cu_vPS_{6-z}F_{z1}Cl_{z2}$, $Li_{7-v-z}Cu_vPS_{6-z}F_{z1}Br_{z2}$, $Li_{7-v-z}Cu_vPS_{6-z}F_{z1}I_{z2}$, $Li7-v-zCUvPS6-_zCl_{z1}Br_{z2}$, $Li_{7-v-z}Cu_vPS_{6-z}Cl_{z1}I_{z2}$, $Li_{7-v-z}Cu_vPS_{6-z}Cl_{z1}F_{z2}$, $Li7-zCUvPS6-zBrz1$ $I_{z2}$, $Li7-v-_zCu_vPS_{6-z}Br_{z1}F_{z2}$, $Li_{7-v-z}Cu_vPS_{6-z}Br_{z1}Cl_{z2}$, $Li_{7-v-z}Cu_vPS_{6-z}I_{z1}F_{z2}$, $Li_{7-v-z}Cu_vPS_{6-z}I_{z1}Cl_{z2}$, $Li_{7-v-z}Cu_vPS_{6-z}I_{z1}Br_{z2}$,

$Li_{7-v-z}Mg_vPS_{6-z}F_{z1}$, $Li_{7-v-z}Mg_vPS_{6-z}Cl_{z1}$, $Li_{7-v-z}Mg_vPS_{6-z}Br_{z1}$, $Li_{7-v-z}Mg_vPS_{6-z}I_{z1}$,

$Li_{7-v-z}Mg_vPS_{6-z}F_{z1}Cl_{z2}$, $Li_{7-v-z}Mg_vPS_{6-z}F_{z1}Br_{z2}$, $Li_{7-v-z}Mg_vPS_{6-z}F_{z1}I_{z2}$, $Li_{7-v-z}Mg_vPS_{6-z}Cl_{z1}Br_{z2}$, $Li_{7-v-z}Mg_vPS_{6-z}Cl_{z1}I_{z2}$, $Li_{7-v-z}Mg_vPS_{6-z}Cl_{z1}F_{z2}$, $Li_{7-v-z}Mg_vPS_{6-z}Br_{z1}I_{z2}$, $Li_{7-v-z}Mg_vPS_{6-z}Br_{z1}F_{z2}$, $Li_{7-v-z}Mg_vPS_{6-z}Br_{z1}Cl_{z2}$, $Li_{7-v-z}Mg_vPS_{6-z}I_{z1}F_{z2}$, $Li_{7-v-z}Mg_vPS_{6-z}I_{z1}Cl_{z2}$, $Li_{7-v-z}Mg_vPS_{6-z}I_{z1}Br_{z2}$,

$Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$,

$Li_{7-v-z}Ag_vPS_{6-z}F_{z1}Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, and $Li_{7-v-z}Ag_vPS_{6-z}I_{z1}Br_{z2}$,

in Formulas, $0<v<0.7$, $0<z1<2$, $0\leq z2<1$, $0<z<2$, and $z=z1+z2$. For example, $0<v\leq0.7$, $0<z1<2$, $0<z2\leq0.5$, $0<z<2$, and $z=z1+z2$. For example, $0<v\leq0.5$, $0<z1<2$, $0<z2\leq0.5$, $0<z<2$, and $z=z1+z2$. For example, $0<v\leq0.3$, $0<z1\leq1.5$, $0<z2\leq0.5$, $0.2\leq z\leq1.8$, and $z=z1+z2$. For example, $0<v\leq0.1$, $0<z1\leq1.5$, $0<z2\leq0.5$, $0.5\leq z\leq1.8$, and $z=z1+z2$. For example, $0<v\leq0.05$, $0<z1\leq1.5$, $0\leq z2\leq0.2$, $1.0\leq z\leq1.8$, and $z=z1+z2$.

The solid ion conductor compound represented by Formula 1 may be, for example, a solid ion conductor compound represented by Formula 4:

<Formula 4> $Li_{7-m\times v-z}M4_vPS_{6-z-w}M7_z(SO_4)_w$

in Formula 4,

M4 is Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m is an oxidation number of M4,

M7 is F, Cl, Br, or I, and

$0<v<1$, $0<z\leq2$, $0<w<1$, and $1\leq m\leq2$. For example, $0<v\leq0.7$, $0<z\leq2$, and $0<w\leq0.5$. For example, $0<v\leq0.5$, $0<z\leq2$, and $0<w\leq0.2$. For example, $0<v\leq0.3$, $0.2\leq z\leq1.8$, and $0<w\leq0.1$. For example, $0<v\leq0.1$, $0.5\leq z\leq1.8$, and $0<w\leq0.1$. For example, $0<v\leq0.05$, $1.0\leq z\leq1.8$, and $0\leq w\leq0.1$.

The solid ion conductor compound represented by Formula 1 may be, for example, solid ion conductor compounds represented by Formulas 4a to 4e:

<Formula 4a> $Li_{7-v-z}Na_vPS_{6-z-w}M7_z(SO_4)_w$

<Formula 4b> $Li_{7-v-z}K_vPS_{6-z-w}M7_z(SO_4)_w$

<Formula 4c> $Li_{7-v-z}Cu_vPS_{6-z-w}M7_z(SO_4)_w$

<Formula 4d>        $Li_{7-v-z}Mg_vPS_{6-z-w}M7_z(SO_4)_w$

<Formula 4e>        $Li_{7-v-z}Ag_vPS_{6-z-w}M7_z(SO_4)_w,$

in Formulas 4a to 4e,

M7 is F, Cl, Br, or I, and

$0<v<0.7$, $0<z\leq2$, and $0<w<0.2$. For example, $0<v\leq0.7$, $0<z\leq2$, and $0<w<0.2$. For example, $0<v\leq0.5$, $0<z\leq2$, and $0<w<0.2$. For example, $0<v\leq0.3$, $0.2\leq z\leq1.8$, and $0\leq w\leq0.1$. For example, $0<v\leq0.1$, $0.5\leq z\leq1.8$, and $0<w\leq0.1$. For example, $0<v\leq0.05$, $1.0\leq z\leq1.8$, and $0<w\leq0.1$.

The solid ion conductor compound represented by Formula 1 may be, for example, solid ion conductor compounds represented by Formulas:

$Li_{7-v-z}Na_vPS_{6-z-w}F_z(SO_4)_w,$ $Li_{7-v-z}Na_vPS_{6-z-w}Cl_z(SO_4)_w,$ $Li_{7-v-z}Na_vPS_{6-z-w}Br_z(SO_4)_w,$ $Li_{7-v-z}Na_vPS_{6-z-w}I_z(SO_4)_w,$

$Li_{7-v-z}K_vPS_{6-z-w}F_z(SO_4)_w,$ $Li_{7-v-z}K_vPS_{6-z-w}Cl_z(SO_4)_w,$ $Li_{7-v-z}K_vPS_{6-z-w}Br_z(SO_4)_w,$ $Li_{7-v-z}K_vPS_{6-z-w}I_z(SO_4)_w,$

$Li_{7-v-z}Cu_vPS_{6-z-w}F_z(SO_4)_w,$ $Li_{7-v-z}Cu_vPS_{6-z-w}Cl_z(SO_4)_w,$ $Li_{7-v-z}Cu_vPS_{6-z-w}Br_z(SO_4)_w,$ $Li_{7-v-z}Cu_vPS_{6-z-w}I_z(SO_4)_w,$

$Li_{7-v-z}Mg_vPS_{6-z-w}F_z(SO_4)_w,$ $Li_{7-v-z}Mg_vPS_{6-z-w}Cl_z(SO_4)_w,$ $Li_{7-v-z}Mg_vPS_{6-z-w}Br_z(SO_4)_w,$ $Li_{7-v-z}Mg_vPS_{6-z-w}I_z(SO_4)_w,$

$Li_{7-v-z}Ag_vPS_{6-z-w}F_z(SO_4)_w,$ $Li_{7-v-z}Ag_vPS_{6-z-w}Cl_z(SO_4)_w,$ $Li_{7-v-z}Ag_vPS_{6-z-w}Br_z(SO_4)_w,$ and $Li_{7-v-z}Ag_vPS_{6-z-w}I_z(SO_4)_w,$

in Formulas,

$0<v<0.7$, $0<z\leq2$, and $0<w<0.2$. For example, $0<v\leq0.7$, $0<z\leq2$, and $0<w<0.2$. For example, $0<v\leq0.5$, $0<z\leq2$, and $0<w<0.2$. For example, $0<v\leq0.3$, $0.2\leq z\leq1.8$, and $0\leq w\leq0.1$. For example, $0<v\leq0.1$, $0.5\leq z\leq1.8$, and $0\leq w\leq0.1$. For example, $0<v\leq0.05$, $1.0\leq z\leq1.8$, and $0<w\leq0.1$.

The solid ion conductor compound represented by Formula 1 may be, for example, a solid ion conductor compound represented by Formula 5:

<Formula 5>        $Li_{7-z}PS_{6-z-w}M7_z(SO_4)_w$

in Formula 5,

M7 is F, Cl, Br, or I, and

$0<z\leq2$ and $0<w<2$. For example, $0<z\leq2$ and $0<w\leq1$. For example, $0<z\leq2$ and $0<w\leq0.5$. For example, $0.2\leq z\leq1.8$ and $0<w\leq0.2$. For example, $0.5\leq z\leq1.8$ and $0\leq w\leq0.1$. For example, $1.0\leq z\leq1.8$ and $0<w\leq0.1$.

The solid ion conductor compound represented by Formula 1 may be, for example, solid ion conductor compounds represented by Formulas:

$Li_{7-z}PS_{6-z-w}F_z(SO_4)_w,$ $Li_{7-z}PS_{6-z-w}Cl_z(SO_4)_w,$ $Li_{7-z}PS_{6-z-w}Br_z(SO_4)_w,$ and $Li_{7-z}PS_{6-z-w}I_z(SO_4)_w,$

in Formulas,

$0<z\leq2$ and $0<w<2$. For example, $0<z\leq2$ and $0<w\leq1$. For example, $0<z\leq2$ and $0<w\leq0.5$. For example, $0.2\leq z\leq1.8$ and $0<w\leq0.2$. For example, $0.5\leq z\leq1.8$ and $0\leq w\leq0.1$. For example, $1.0\leq z\leq1.8$ and $0<w\leq0.1$.

The solid ion conductor compound represented by Formula 1 belongs to, for example, a cubic crystal system, and more specifically, may belong to the F-43m space group. Further, as described above, the solid ion conductor compound represented by Formula 1 may be an argyrodite-type sulfide having an argyrodite-type crystal structure. The solid ion conductor compound represented by Formula 1 may include at least one of monovalent cation elements and divalent cation elements, which are substituted at some of lithium sites in the argyrodite-type crystal structure, may include different kinds of halogen elements, or may include $SO_n$ anions substituted at halogen sites, thereby providing both improved lithium ion conductivity and improved electrochemical stability to lithium metals.

The solid ion conductor compound represented by Formula 1 may have peaks at positions of 25.48°±0.50°, 30.01°±1.0°, 31.38°±0.50°, 46.0°±1.0°, 48.5°±1.0°, and 53.0°±1.0° in an XRD spectrum using CuKα radiation. Since the solid ion conductor compound represented by Formula 1 has an argyrodite-type crystal structure, it may have such peaks in the XRD spectrum using CuKα radiation.

In the XRD spectrum using CuKα radiation, in the solid ion conductor compound represented by Formula 1, peak intensity (Ia) of a crystalline peak at diffraction angle of $2\theta = 30.01 \pm 1.0°$ is greater than peak intensity (Ib) of a broad peak at diffraction angle of $2\theta = 19.0° \pm 3.0°$. Since the solid ion conductor compound has such a peak intensity relationship, the solid ion conductor compound has high crystallinity, and as a result, the solid ion conductor compound may provide high ion conductivity of 3 mS/cm or more at 25°C.

[Solid electrolyte]

A solid electrolyte according to another embodiment includes the solid ion conductor compound represented by Formula 1. The solid electrolyte may have high ion conductivity and high chemical stability by including such a solid ion conductor compound. The solid electrolyte including the solid ion conductor compound represented by Formula 1 may provide improved stability to air, and may provide improved electrochemical stability to lithium metals. Accordingly, the solid ion conductor compound represented by Formula 1 may be used as a solid electrolyte of an electrochemical cell.

The solid electrolyte may additionally include a conventional solid electrolyte in addition to the solid ion conductor compound represented by Formula 1. For example, the solid electrolyte may additionally include a conventional sulfide-based solid electrolyte and/or a conventional oxide-based solid electrolyte. Examples of the conventional solid ion conductor compound additionally included may include, but are not limited to, $Li_2O\text{-}Al_2O_3\text{-}TiO_2\text{-}P_2O_5$(LATP), LISI-CON(Lithium Super Ionic Conductor), LIPON($Li_{3-y}PO_{4-x}N_x$, 0<x<4, 0<y<3), Thio-LISICON($Li_{3.25}Ge_{0.25}P_{0.75}S_4$), $Li_2S$, $Li_2S\text{-}P_2S_5$, $Li_2S\text{-}SiS_2$, $Li_2S\text{-}GeS_2$, $Li_2S\text{-}B_2S_3$, and $Li_2S\text{-}Al_2S_3$. Any conventional solid ion conductor compound may be used as long as it may be used in the art.

The solid electrolyte may be formed in the form of a powder or a molding. The solid electrolyte in the form of a molding may be in the form of, for example, a pellet, a sheet, a thin films, or the like, but the form thereof is not necessarily limited thereto, and may have various forms depending on the intended use.

[Electrochemical cell]

An electrochemical cell according to another embodiment includes a cathode layer including a cathode active material layer; an anode layer including an anode active material layer; and an electrolyte layer between the cathode layer and the anode layer, wherein the cathode active material layer and/or the electrolyte layer includes the solid ion conductor compound represented by Formula 1. Since the electrochemical cell includes the solid ion conductor compound represented by Formula 1, the lithium ion conductivity of the electrochemical cell is improved, and the stability thereof to lithium metal is improved. The electrochemical cell may be, for example, an all-solid secondary battery, a liquid electrolyte-containing secondary battery, or a lithium-air battery, but is not limited thereto. Any electrochemical cell may be used as long as it may be used in the art.

Hereinafter, an all-solid secondary battery will be described in more detail.

[All-solid secondary battery: Type 1]

An all-solid secondary battery may include the solid ion conductor compound represented by Formula 1.

The all-solid secondary battery may include a cathode layer including a cathode active material layer; an anode layer including an anode active material layer; and an electrolyte layer between the cathode layer and the anode layer, wherein the cathode active material layer and/or the electrolyte layer may include the solid ion conductor compound represented by Formula 1.

An all-solid secondary battery according to an embodiment may be manufactured as follows.

(Sold electrolyte layer)

First, a solid electrolyte layer is prepared.

The solid electrolyte layer may be prepared by mixing the solid ion conductor compound represented by Formula 1 with a binder and drying the mixture, or may be prepared by roll-pressing the powder of the solid ion conductor compound represented by Formula 1 in a certain form by a pressure of 1 ton to 10 tons. The solid ion conductor compound represented by Formula 1 is used as a solid electrolyte.

The average particle diameter of the solid electrolyte may be, for example, 0.5μm to 20μm. Since the solid

electrolyte has such an average particle diameter, bonding properties of the solid electrolyte is improved in the process of forming a sintered body, and thus the ion conductivity and lifetime characteristics of solid electrolyte particles may be improved.

The thickness of the solid electrolyte layer may be $10\mu m$ to $200\mu m$. Since the solid electrolyte layer has such a thickness, a sufficient moving speed of lithium ions may be ensured, and as a result, high ionic conductivity may be obtained.

The solid electrolyte layer may additionally include a conventional sulfide-based solid electrolyte or a conventional oxide-based solid electrolyte in addition to the solid ion conductor compound represented by Formula 1.

Examples of the conventional sulfide-based solid electrolyte may include lithium sulfide, silicon sulfide, phosphorus sulfide, boron sulfide, and combinations thereof. Examples of the conventional sulfide-based solid electrolyte may include $Li_2S$, $P_2S_5$, $SiS_2$, $GeS_2$, $B_2S_3$, and combinations thereof. The conventional sulfide-based solid electrolyte may be $Li_2S$ or $P_2S_5$. Conventional sulfide-based solid electrolyte particles are known to have higher lithium ion conductivity than other inorganic compounds. For example, the conventional sulfide-based solid electrolyte includes $Li_2S$ and $P_2S_5$. When the sulfide solid electrolyte material constituting the conventional sulfide-based solid electrolyte contains $Li_2S$-$P_2S_5$, the mixing molar ratio of $Li_2S$ to $P_2S_5$ may be in a range of about 50:50 to about 90:10. Further, an inorganic solid electrolyte prepared by adding $Li_3PO_4$, halogen, a halogen compound, $Li_{2+2x}Zn_{1-x}GeO_4$("LISICON"), $Li_{3+y}PO_{4-x}N_x$("LIPON"), $Li_{3.25}Ge_{0.25}P_{0.75}S_4$("ThioLISICON"), or $Li_2O$-$Al_2O_3$-$TiO_2$-$P_2O_5$("LATP") to $Li_2S$-$P_2S_5$, $SiS_2$, $GeS_2$, $B_2S_3$, or a combination thereof may be used as the conventional sulfide-based solid electrolyte. Non-limiting examples of the conventional sulfide-based solid electrolyte may include $Li_2S$-$P_2S_5$; $Li_2S$-$P_2S_5$-LiX (X=halogen element); $Li_2S$-$P_2S_6$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ - $P_2S_5$-$Z_mS_n$ (0<m<10, 0<n<10, Z=Ge, Zn or Ga); $Li_2S$-$GeS_2$; $Li_2S$-$SiS_2$-$Li_3PO_4$; and $Li_2S$-$SiS_2$-$Li_PMO_q$ (0<p<10, 0<q<10, M=P, Si, Ge, B, Al, Ga or In). In this regard, the conventional sulfide-based solid electrolyte material may be prepared by treating a raw starting material (for example, $Li_2S$, $P_2S_5$, or the like) of a sulfide-based solid electrolyte material by a melt quenching method or a mechanical milling method. A calcination process may be performed after the treatment.

Examples of the binder included in the solid electrolyte layer may include, but are not limited to, styrene-butadiene rubber (SBR), polytetrafluoroethylene, polyvinylidene fluoride, polyethylene, and polyvinyl alcohol. Any binder may be used as long as it is used in the art. The binder of the solid electrolyte layer may be the same as or different from the binder of the anode layer and the cathode layer.

(Cathode layer)

Next, a cathode layer is prepared.

The cathode layer may be prepared by forming a cathode active material layer including a cathode active material on a current collector. The average particle diameter of the cathode active material may be, for example, $2\ \mu m$ to $10\ \mu m$.

Any cathode active material may be used without limitation as long as it is commonly used in secondary batteries. For example, the cathode active material may be lithium transition metal oxide, transition metal sulfide, or the like. For example, at least one of composite oxides of lithium and a metal selected from cobalt, manganese, nickel, and combinations thereof may be used as the cathode active material. Specifically, as the lithium transition metal oxide, a compound represented by any one of Formulas of $Li_aA_{1-b}B_bD_2$(where, $0.90 \le a \le 1.8$, and $0 \le b \le 0.5$); $Li_aE_{1-b}B_bO_{2-c}D_c$(where, $0.90 \le a \le 1.8$, $0 \le b \le 0.5$, and $0 \le c \le 0.05$); $LiE_{2-b}B_bO_{4-c}D_c$(where, $0 \le b \le 0.5$, and $0 \le c \le 0.05$); $Li_aNi_{1-b-c}Co_bB_cD_\alpha$(where, $0.90 \le a \le 1.8$, $0 \le b \le 0.5$, $0 \le c \le 0.05$, and $0 < \alpha \le 2$); $Li_aNi_{1-b-c}Co_bB_cO_{2-\alpha}F_\alpha$(where, $0.90 \le a \le 1.8$, $0 \le b \le 0.5$, $0 \le c \le 0.05$, and $0 < \alpha < 2$); $Li_aNi_{1-b-c}Co_bB_cO_{2-\alpha}F_2$(where, $0.90 \le a \le 1.8$, $0 \le b \le 0.5$, $0 \le c \le 0.05$, and $0 < \alpha < 2$); $Li_aNi_{1-b-c}Mn_bB_cD_\alpha$(where, $0.90 \le a \le 1.8$, $0 \le b \le 0.5$, $0 \le c \le 0.05$, and $0 < \alpha < 2$); $Li_aNi_{1-b-c}Mn_bB_cO_{2-\alpha}F_\alpha$(where, $0.90 \le a \le 1.8$, $0 \le b \le 0.5$, $0 \le c \le 0.05$, and $0 < \alpha < 2$); $Li_aNi_{1-b-c}Mn_bB_cO_{2-\alpha}F_2$(where, $0.90 \le a \le 1.8$, $0 \le b \le 0.5$, $0 \le c \le 0.05$, and $0 < \alpha < 2$); $Li_aNi_bE_cG_dO_2$(where, $0.90 \le a \le 1.8$, $0 \le b \le 0.9$, $0 \le c \le 0.5$, $0.001 \le d \le 0.1$); $Li_aNi_bCo_cMn_dGeO_2$(where, $0.90 \le a \le 1.8$, $0 \le b \le 0.9$, $0 \le c \le 0.5$, $0 \le d \le 0.5$, and $0.001 \le e \le 0.1$); $Li_aNiG_bO_2$(where, $0.90 \le a \le 1.8$ and $0.001 \le b \le 0.1$); $Li_aCoG_bO_2$(where, $0.90 \le a \le 1.8$ and $0.001 \le b \le 0.1$); $Li_aMnG_bO_2$(where, $0.90 \le a \le 1.8$ and $0.001 \le b \le 0.1$); $Li_aMn_2G_bO_4$(where, $0.90 \le a \le 1.8$ and $0.001 \le b \le 0.1$); $QO_2$; $QS_2$; $LiQS_2$; $V_2O_5$; $LiV_2O_2$; $LiIO_2$; $LiNiVO_4$; $Li_{(3-f)}J_2(PO_4)_3(0 \le f \le 2)$; $Li_{(3-f)}Fe_2(PO_4)_3(0 \le f \le 2)$; and $LiFePO_4$ may be used. In the above Formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. For example, there are $LiCoO_2$, $LiMn_xO_{2x}$(x=1, 2), $LiNi_{1-x}Mn_xO_{2x}$(0<x<1), $Ni_{1-x-y}Co_xMn_yO_2$ ($0\le x\le 0.5$, $0\le y\le 0.5$), $Ni_{1-x-y}Co_xAl_yO_2$ ($0\le x\le 0.5$, $0\le y\le 0.5$), $LiFePO_4$, $TiS_2$, $FeS_2$, TiSs, and FeSs. In this compound, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. In one or more embodiments, a compound having a coating layer on the surface of the compound may be used, or a mixture of the compound and a compound having a coating layer may be used. The coating layer formed on the surface of the compound may include a coating element compound of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. As the coating element included in the coating layer, Mg, Al, Co, K, Na, Ca, Si, Ti, V, Sn, Ge, Ga, B, As, Zr, or a mixture thereof may be used. The method of forming the coating layer is selected within the range that does not adversely influence the physical properties of the cathode active material. The coating method is, for example, spray coating or dipping. Since the detailed coating method is well understood by those skilled in the art, a detailed description thereof will be omitted.

The cathode active material includes a lithium salt of a transition metal oxide having a layered rock salt type structure among the aforementioned lithium transition metal oxides. The " layered rock salt type structure" refers to a structure in which oxygen atom layers and metal atom layers are alternately and regularly arranged in the <111 > direction of a cubic rock salt type structure and thus each of the atom layers forms a two-dimensional plane. The "cubic rock salt type structure" refers to a sodium chloride (NaCl) type structure, which is a kind of crystal structure, and more specifically, in which face centered cubic lattices (FCCs), which form cations and anions, respectively, are arranged having the number of unit lattice offset by one-half of the ridge of the unit lattice. The lithium transition metal oxide having such layered rock salt structure is a ternary lithium transition metal oxide such as $LiNi_xCo_yAl_zO_2$ (NCA) or $LiNi_xCo_yMn_zO_2$ (NCM) ($0 <x <1$, $0 <y <1$, $0 <z <1$, $x + y + z= 1$). When the cathode active material includes a ternary lithium transition metal oxide having the layered rock salt structure, the energy density and thermal stability of an all-solid secondary battery are further improved.

The cathode active material may be covered by the coating layer as described above. The coating layer may be any of the known coating layer of the cathode active material of the all-solid secondary battery. The coating layer is, for example, $Li_2O$-$ZrO_2$ (LZO) and the like.

When the cathode active material contains nickel (Ni) as the ternary lithium transition metal oxide such as NCA or NCM, the capacity density of the all-solid secondary battery is increased, thereby reducing the metal dissolution of the cathode active material in the charged state. As a result, the cycle characteristic of the all-solid-state secondary battery in the charged state is improved.

The shape of the cathode active material is a particle shape such as a true sphere or an elliptic sphere. The particle diameter of the cathode active material is not particularly limited, and is in a range applicable to the cathode active material of the conventional all-solid secondary battery. The content of the cathode active material of the cathode layer is also not particularly limited, and is in a range applicable to the cathode layer of the conventional all-solid-state secondary battery. The content of the cathode active material in the cathode active material layer may be, for example, 50 wt% to 95 wt%.

The cathode active material layer may additionally include the solid ion conductor compound represented by Formula 1.

The cathode active material layer may include a binder. Examples of the binder include styrene-butadiene rubber (SBR), polytetrafluoroethylene, polyvinylidene fluoride, and polyethylene.

The cathode active material layer may include a conductive material. Examples of the conductive material include graphite, carbon black, acetylene black, Ketjen black, carbon fiber, and metal powder.

The cathode active material layer may further include additives such as a filler, a coating agent, a dispersant, and an ion conductive assistant, in addition to the aforementioned cathode active material, solid electrolyte, binder, and conductive material.

As the filler, coating agent, dispersant, and ion conductive assistant included in the cathode active material layer, known materials generally used for an electrode of the all-solid secondary battery may be used.

As the cathode current collector, for example, a plate or foil including aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof may be used. The cathode current collector may be omitted.

The cathode current collector may further include a carbon layer disposed on one surface or both surfaces of a metal substrate. Since the carbon layer is additionally placed on the metal substrate, it is possible to prevent a metal of the metal substrate from being corroded by the solid electrolyte included in the cathode layer and to reduce the interfacial resistance between the cathode active material layer and the cathode current collector. The thickness of the carbon layer may be, for example, 1 $\mu$m to 5 $\mu$m. When the carbon layer is too thin, it may be difficult to completely block the contact between the metal substrate and the solid electrolyte. When the carbon layer is too thick, the energy density of the all-solid secondary battery may be lowered. The carbon layer may include amorphous carbon, crystalline carbon, or the like.

(Anode layer)

Next, an anode layer is prepared.

The anode layer may be prepared in the same manner as the cathode layer, except that an anode active material is used instead of the cathode active material. The anode layer may be prepared by forming an anode active material layer including an anode electrode active material on an anode current collector.

The anode active material layer may additionally include the above-described solid ion conductor compound represented by Formula 1.

The anode active material may be lithium metal, a lithium metal alloy, or a combination thereof.

The anode active material layer may further include a conventional anode active material in addition to lithium metal, a lithium metal alloy, or a combination thereof. The conventional anode active material may include, for example, at least one selected from a metal alloyable with lithium, a transition metal oxide, a non-transition metal oxide, and a carbon-based material. The metal alloyable with lithium may be, for example, Ag, Si, Sn, Al, Ge, Pb, Bi, Sb, an Si-Y alloy (Y is an alkali metal, alkaline earth metal, group 13 element, group 14 element, transition metal, rare earth element, or a combination thereof, not Si), or an Sn-Y alloy (Y is an alkali metal, alkaline earth metal, group 13 element, group 14 element, transition metal, rare earth element, or a combination thereof, not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The transition metal oxide may be, for example, lithium titanium oxide, vanadium oxide, or lithium vanadium oxide. The non-transition metal oxide may be, for example, $SnO_2$ or $SiO_x$ (0<x<2). The carbon-based material may be, for example, crystalline carbon, amorphous carbon, or a mixture thereof. The crystalline carbon may be graphite such as amorphous, plate-shaped, flake-shaped, spherical or fibrous natural graphite or artificial graphite, and the amorphous carbon may be soft carbon (low-temperature calcined carbon) or hard carbon, mesophase pitch carbide, or calcined coke.

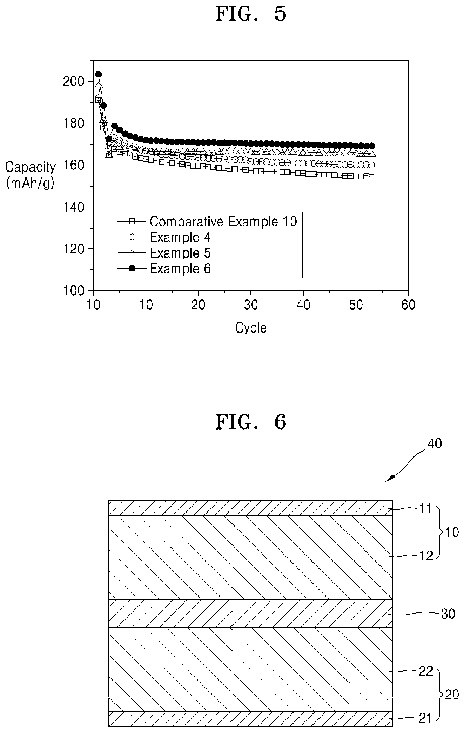

Referring to FIG. 6, an all-solid second battery 40 according to an embodiment includes a solid electrolyte layer 30, a cathode layer 10 on one surface of the solid electrolyte layer 30, and an anode layer 20 on the other surface of the solid electrolyte layer 30. The cathode layer 10 includes a cathode active material layer 12 contacting the solid electrolyte layer 30 and a cathode current collector 11 contacting the cathode active material layer 12, and the anode layer 20 includes an anode active material layer 22 contacting the solid electrolyte layer 30 and an anode current collector 21 contacting the anode active material layer 22. The all-solid second battery 40 is completed by forming the cathode active material layer 12 and the anode active material layer 22 on both surfaces of the solid electrolyte layer 30 and respectively forming the cathode current collector 11 and the anode current collector 21 on the cathode active material layer 12 and the anode active material layer 22. Alternatively, the all-solid second battery 40 is completed by sequentially stacking the anode active material layer 22, the solid electrolyte layer 30, the cathode active material layer 12, and the cathode current collector 11 on the anode current collector 21.

In the all-solid second battery 40, the average particle diameter of the solid ion conductor compound included in the cathode active material layer 12 is, for example, 0.5 $\mu$m to 5 $\mu$m, 0.5 $\mu$m to 4 $\mu$m, or 0.5 $\mu$m to 3 $\mu$m. In the all-solid second battery 40, the average particle diameter of the solid ion conductor compound included in the solid electrolyte layer 30 is, for example, 1$\mu$m to 7$\mu$m, 1$\mu$m to 6$\mu$m, 1$\mu$m to 5, or 2$\mu$m to 4$\mu$m. Since the solid ion conductor compound included in the cathode active material layer 12 and/or the solid electrolyte layer 30 has a particle diameter within this range, the cycle characteristics of the all-solid secondary battery 40 may be further improved.

[All-solid secondary battery: Type 2]

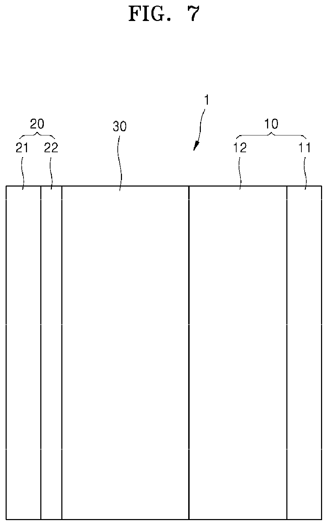

Referring to FIGS. 7 to 8, an all-solid secondary battery includes a cathode layer 10 including a cathode active material layer 12 disposed on a cathode current collector 11; an anode layer 20 including an anode active material layer 22 disposed on an anode current collector 21; and an electrolyte layer 30 disposed between the anode layer 10 and the cathode layer 20, and the cathode active material layer 12 and/or the electrolyte layer 30 may include the solid ion conductor compound represented by Formula 1.

An all-solid secondary battery according to another embodiment may be manufactured as follows.

A cathode layer and a solid electrolyte layer are prepared in the same manner as the above-described all-solid secondary battery.

(Anode layer)

Next, an anode layer is prepared.

Referring to FIGS. 7 to 8, an anode layer 20 includes an anode current collector 21 and an anode active material layer 22 disposed on an anode current collector 21, and the anode active material layer 22 includes, for example, an anode active material and a binder.

The anode active material included in the anode active material layer 22 has a particle shape. The average particle diameter of the anode active material having a particle shape is, for example, 4μm or less, 3μm or less, 2μm or less, 1μm or less, or 900nm or less. The average particle diameter of the anode active material having a particle shape is, for example, 10nm to 4μm or less, 10nm to 3μm or less, 10nm to 2μm or less, 10nm to 1μm or less, or 10nm to 900nm or less. Since the anode active material has an average particle diameter within this range, the reversible absorption and/or desorption of lithium during charging and discharging may be easier. The average particle diameter of the anode active material is, for example, a median diameter (D50) measured using a laser particle size distribution meter.

The anode active material included in the anode active material layer 22 includes, for example, at least one selected from a carbon-based anode active material and a metal or metalloid anode active material.

The carbon-based anode active material is particularly amorphous carbon. Examples of amorphous carbon include, but are not limited to, carbon black (CB), acetylene black (AB), furnace black (FB), ketjen black (KB), and graphene. Any amorphous carbon may be used as long as it is classified as amorphous carbon in the art. Amorphous carbon is a carbon that does not have crystallinity or has very low crystallinity, and is distinguished from crystalline carbon or graphite-based carbon.

The metal or metalloid anode active material includes, but is not limited to, at least one selected from gold (Au), platinum (Pt), palladium (Pd), silicon (Si), silver (Ag), aluminum (Al), bismuth (Bi), tin (Sn), and zinc (Zn). Any metal or metalloid anode active material may be used as long as it is used as a metal anode active material or metalloid anode active material capable of forming an alloy or compound with lithium. For example, nickel (Ni) is not a metal anode active material because it does not form an alloy with lithium.

The anode active material layer 22 includes a kind of anode active material among such anode active materials, or a mixture of a plurality of different anode active materials. For example, the anode active material layer 22 includes only amorphous carbon, or includes at least one selected from gold (Au), platinum (Pt), palladium (Pd), silicon (Si), silver (Ag), aluminum (Al), bismuth (Bi), tin (Sn), and zinc (Zn). Alternatively, the anode active material layer 22 includes a mixture of amorphous carbon and at least one selected from gold (Au), platinum (Pt), palladium (Pd), silicon (Si), silver (Ag), aluminum (Al), bismuth (Bi), tin (Sn), and zinc (Zn). The mixing weight ratio of the mixture of amorphous carbon and gold (Au) or the like is, for example, 10:1 to 1:2, 5:1 to 1:1, or 4:1 to 2:1, but is not limited thereto. The mixing weight ratio thereof is selected depending on required characteristics of the all-solid secondary battery 1. Since the anode active material has such a composition, cycle characteristics of the all-solid secondary battery 1 is further improved.

The anode active material included in the anode active material layer 22 includes a mixture of first particles made of amorphous carbon and second particles made of metal or metalloid. Examples of metal or metalloid include gold (Au), platinum (Pt), palladium (Pd), silicon (Si), silver (Ag), aluminum (Al), bismuth (Bi), tin (Sn), and zinc (Zn). The metalloid is otherwise a semiconductor. The content of the second particles is about 8 wt% to about 60 wt%, about 10 wt% to about 50wt%, about 15 wt% to about 40 wt%, or about 20 wt% to about 30 wt%, based on the total weight of the mixture. Since the content of the second particles is within the above range, for example, cycle characteristics of the all-solid secondary battery 1 are further improved.

Examples of the binder included in the anode active material layer 22 may include, but are not limited to, styrene-butadiene rubber (SBR), polytetrafluoroethylene, polyvinylidene fluoride, polyethylene, a vinylidene fluoride/hexafluoropropylene copolymer, polyacrylonitrile, and polymethyl methacrylate. Any binder may be used as long as it is used in the art. The binder may consist of a single binder or a plurality of different binders.

Since the anode active material layer 22 includes a binder, the anode active material layer 22 is stabilized on the anode current collector 21. Further, during the charging and discharging process, cracks of the anode active material layer 22 is suppressed regardless of a change in volume and/or a relative position of the anode active material layer 22. For example, when the anode active material layer 22 does not include a binder, it is possible for the anode active material layer 22 to be easily separated from the anode current collector 21. When the anode active material layer 22 is separated from the anode current collector 21, in the exposed portion of the anode current collector 21, the possibility of the occurrence of a short circuit increases as the anode current collector 21 comes into contact with the solid electrolyte layer 30. The anode active material layer 22 is prepared, for example, by applying a slurry, in which a material constituting the anode active material layer 22 is dispersed, onto the anode current collector 21 and drying the slurry. Stable dispersion of the anode active material in the slurry is possible by including the binder in the anode active material layer 22. For example, when the slurry is applied onto the anode current collector 21 by screen printing, it is possible to suppress the clogging of a screen (for example, clogging by agglomerates of the anode active material).

The anode active material layer 22 may further include additives such as a filler, a coating agent, a dispersant, and an ion conductivity auxiliary, which are used in the conventional all-solid secondary battery 1.

The thickness of the anode active material layer 22 is, for example, 50% or less, 40% or less, 30% or less, 20% or less, 10% or less, or 5% or less of the thickness of the cathode active material layer 12: 12a or 12b. The thickness of the anode active material layer 22 is, for example, 1μm to 20μm, 2μm to 10μm, or 3μm to 7μm. When the anode active material layer 22 is too thin, lithium dendrite formed between the anode active material layer 22 and the anode current collector 21 collapses the anode active material layer 22, which makes it difficult to improve the cycle characteristics of the all-solid secondary battery 1. When the thickness of the anode active material layer 22 increases excessively, the energy density of the all-solid secondary battery 1 decreases, and the internal resistance of the all-solid secondary battery 1 due to the anode active material layer 22 increases, which makes it difficult to improve the cycle characteristics of the all-solid secondary battery 1.

When the thickness of the anode active material layer 22 decreases, for example, the charging capacity of the anode active material layer 22 also decreases. The charging capacity of the anode active material layer 22 is, for example, 50% or less, 40% or less, 30% or less, 20% or less, 10% or less, 5% or less, or 2% or less of the charging capacity of the cathode active material layer 12. The charging capacity of the anode active material layer 22 is, for example, 0.1% to 50%, 0.1% to 40%, 0.1% to 30%, 0.1% to 20%, 0.1% to 10%, 0.1% to 5%, or 0.1% to 2%of the charging capacity of the cathode active material layer 12. When the charging capacity of the negative electrode active material layer 22 is too small, the anode active material layer 22 becomes very thin, so that lithium dendrite formed between the anode active material layer 22 and the anode current collector 21 during the repetitive charging and discharging process collapses the anode active material layer 22, which makes it difficult to improve the cycle characteristics of the all-solid secondary battery 1. When the charging capacity of the negative electrode active material layer 22 increases excessively, the energy density of the all-solid secondary battery 1 decreases, and the internal resistance of the all-solid secondary battery 1 due to the anode active material layer 22 increases, which makes it difficult to improve the cycle characteristics of the all-solid secondary battery 1.

The charging capacity of the cathode active material layer 12 is obtained by multiplying the mass of the cathode active material in the cathode active material layer 12 by the charging capacity density (mAh/g) of the cathode active material. When several types of cathode active materials are used, charging capacity density x mass values are calculated for the respective cathode active materials, and the sum of these values is the charging capacity of the cathode active material layer 12. The charging capacity of the anode active material layer 22 is also calculated in the same manner. That is, the charging capacity of the anode active material layer 22 is obtained by multiplying the mass of the anode active material in the anode active material layer 22 by the charging capacity density (mAh/g) of the anode active material. When several types of anode active materials are used, charging capacity density x mass values are calculated for the respective anode active materials, and the sum of these values is the charging capacity of the anode active material layer 12. Here, the charge capacity density of each of the cathode active material and the anode active material is a capacity estimated using an all-solid half-cell using lithium metal as a counter electrode. The charging capacity of each of the cathode active material layer 12 and the anode active material layer 22 is directly measured by measuring the charging capacity using an all-solid half-cell. When the measured charging capacity is divided by the mass of each active material, the charging capacity density is obtained. Alternatively, the charging capacity of each of the cathode active material layer 12 and the anode active material layer 22 may be an initial charging capacity measured during first-cycle charging.

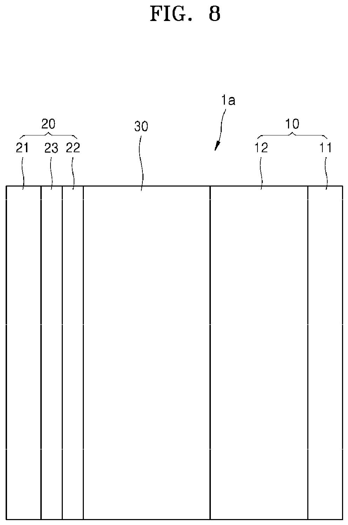

Referring to FIG. 8, the all-solid secondary battery 1a may further include, for example, a metal layer 23 disposed between the cathode current collector 21 and the anode active material layer 22. The metal layer 23 includes lithium or a lithium alloy. Thus, the metal layer 23 acts as a lithium reservoir. Examples of the lithium alloy include, but are not limited to, Li-Al alloy, Li-Sn alloy, Li-In alloy, Li-Ag alloy, Li-Au alloy, Li-Zn alloy, Li-Ge alloy, and Li-Si alloy. Any lithium alloy may be used as long as it is used in the art. The metal layer 23 may be made of one of these alloys or lithium, or may be made of several types of alloys.

The thickness of the metal layer 23 is not particularly limited, but is, for example, $1\mu m$ to $1000\mu m$, $1\mu m$ to $500\mu m$, $1\mu m$ to $200\mu m$, $1\mu m$ to $150\mu m$, $1\mu m$ to $100\mu m$, or $1\mu m$ to $50\mu m$. When the metal layer 23 is too thin, it is difficult for the metal layer 23 to act as a lithium reservoir. When the metal layer 23 is too thick, there is a possibility that the mass and volume of the all-solid secondary battery 1a will increase and the cycle characteristics thereof will be rather deteriorated. The metal layer 23 may be, for example, a metal foil having a thickness within this range.

In the all-solid secondary battery 1a, the metal layer 23 is disposed between the anode current collector 21 and the anode active material layer 22 before assembly of the all-solid secondary battery 1, or is plated between the anode current collector 21 and the anode active material layer 22 by charging after assembly of the all-solid secondary battery 1. When the metal layer 23 is disposed between the anode current collector 21 and the anode active material layer 22 before assembly of the all-solid secondary battery 1, the metal layer 23 acts as a lithium reservoir because it is a metal layer including lithium. For example, before assembly of the all-solid secondary battery 1a, a lithium foil is disposed between the anode current collector 21 and the anode active material layer 22. Accordingly, the cycle characteristics of the all-solid secondary battery 1a including the metal layer 23 are further improved. When the metal layer 23 is plated by charging after assembly of the all-solid secondary battery 1, the energy density of the all-solid secondary battery 1a is increased because the metal layer 23 is not included during assembly of the all-solid secondary battery 1a. For example, when the all-solid secondary battery 1 is charged, the all-solid secondary battery 1 is charged so as to exceed the charging capacity of the anode active material layer 22. That is, the anode active material layer 22 is overcharged. Lithium is absorbed in the anode active material layer 22 at the beginning of charging. The anode active material included in the anode active material layer 22 forms an alloy or a compound with lithium ions transferred from the cathode layer 10. when the all-solid secondary battery 1 is charged so as to exceed the capacity of the cathode active material layer 22, for example, lithium is plated on the rear surface of the anode active material layer 22, that is, between the anode current collector 21 and the anode active material layer 22, and a metal layer corresponding to the metal layer 23 is formed by the plated lithium. The metal layer 23 is a metal layer mainly including lithium (that is, metal lithium). This result is obtained, for example, because the anode active material included in the anode active material layer 22 includes a material forming an alloy or a compound with lithium. During discharging, lithium in the cathode active material layer 22 and the metal layer 23, that is, lithium in the metal layer, are ionized and move toward the cathode layer 10. Therefore, it is possible to use lithium as a negative electrode active material in the all-solid secondary battery 1a. Further, since the anode active material layer 22 covers the metal layer 23, the anode active material layer 22 serves as a protective layer of the metal layer 23, that is, the metal layer and serves to inhibit the precipitation growth of lithium dendrite. Accordingly, a short and a decrease in capacity of the all-solid secondary battery 1a are suppressed, and as a result, the cycle characteristics of the all-solid secondary battery 1a are improved. When the metal layer 23 is disposed by charging after assembly of the all-solid secondary battery 1a, the anode current collector 21 and the anode active material layer 22 and a region therebetween are Li-free regions that do not contain lithium (Li) in the initial state of the all-solid secondary battery 1a or in the state of the all-solid secondary battery 1a after discharging.

The anode current collector 21 is made of, for example, a material that does not react with lithium, that is, a material that does not form both an alloy and a compound. Examples of the material constituting the anode current collector 21 include, but are not limited to, copper (Cu), stainless steel, titanium (Ti), iron (Fe), cobalt (Co), and nickel (Ni). Any material may be used as long as it is used to constitute an electrode current collector in the art. The anode current collector 21 may be made one of the above-described metals, or may be made of an alloy of two or more metals or a coating material. The anode current collector 21 has a plate shape or a foil shape.

The all-solid secondary batteries 1 or 1a may further include a thin film including an element capable of forming an alloy with lithium on the anode current collector 21. The thin film is disposed between the cathode current collector 21 and the cathode active material layer 22. The thin film includes an element capable of forming an alloy with lithium. Examples of the element capable of forming an alloy with lithium include, but are not limited to, gold, silver, zinc, tin, indium, silicon, aluminum, and bismuth. Any element may be used as long as it forms an alloy with lithium in the art. The thin film is made of one of these metals or an alloy of several types of metals. Since the thin film is disposed on the anode current collector 21, for example, the deposition pattern of the metal layer 23 deposited between the thin film 24 and the anode active material layer 22 may be more flattened, and the cycle characteristics of the all-solid secondary battery 1 may be further improved.

The thickness of the thin film is, for example, 1 nm to 800 nm, 10 nm to 700 nm, 50 nm to 600 nm, or 100 nm to 500 nm. When the thickness of the thin film is less than 1 nm, it may be difficult to exert a function by the thin film. When the thin film is too thick, the thin film itself absorbs lithium, the amount of lithium precipitated in an anode decreases, so that the energy density of the all-solid-state battery is lowered, and the cycle characteristics of the all-solid-state secondary batteries 1 and 1a are deteriorated. The thin film may be disposed on the anode current collector 21 by a vacuum deposition method, a sputtering method, a plating method, or the like, but the present disclosure is not necessarily limited to this method, and any method capable of forming a thin film in the art may be used.

A method of preparing a solid ion conductor compound according to another embodiment includes: providing different kinds of precursor compounds having an average particle diameter of 7 $\mu$m or less, respectively; mixing the different kinds of precursor compounds with each other to prepare a mixture; and heat-treating the mixture to prepare a solid ion conductor compound, wherein the solid ion conductor compound has an average particle diameter of 7 $\mu$m or less.

Through this preparation method, it is possible to prepare a solid ion conductor compound having an average particle diameter (D50) of 7 $\mu$m or less and having high ion conductivity of 3 mS/cm or more at 25°C without using a mixing method inducing the agglomeration of particles, such as mechanical milling, while using precursor particles having an average particle diameter of 7 $\mu$m or less. The solid ion conductor compound is, for example, a solid ion conductor compound represented by Formula 1.

This preparation method excludes the use of a mixing method inducing the agglomeration of particles such as dry milling in the entire preparation process. Dry milling is not limited to, for example, ball milling.

Different kinds of precursor particles having an average particle diameter of 7 $\mu$m or less are provided, respectively. For example, a precursor compound having an average particle diameter of 7 $\mu$m or less and including lithium (Li), a precursor compound having an average particle diameter of 7 $\mu$m or less and including an element selected from Group 2 elements and Group 11 elements in the Periodic Table, a precursor compound having an average particle diameter of 7 $\mu$m or less and including phosphorus (P), and a precursor compound having an average particle diameter of 7 $\mu$m or less and including a Group 17 element are provided, respectively. If necessary, a precursor compound having an average particle diameter of 7 $\mu$m or less and including sulfur (S) is additionally prepared. The average particle diameter is, for example, a D50 particle diameter.

The precursor compound having an average particle diameter of 7 μm or less can be prepared, for example, by wet-pulverizing a precursor compound having an average particle diameter of 10 μm to 10 mm. The wet pulverizing is, for example, a method of dispersing a precursor compound in a dispersion medium and then pulverizing the precursor compound using a medium stirring type pulverizer, for example, a ball mill. As the dispersion medium, any solvent that is inert to the precursor compound may be used. The dispersion medium is, for example, an organic solvent. The organic solvent is, for example, xylene, heptane, or the like. Agglomeration between precursor compound particles is prevented by wet pulverizing.

The average particle diameter of the precursor compound having an average particle diameter of 7 μm or less is, for example, 0.5 μm to 5 μm, 0.5 μm to 4 μm, or 0.5 μm to 3 μm. Alternatively, the average particle diameter of the precursor compound having an average particle diameter of 7 μm or less is, for example, 1 μm to 7 μm, 1 μm to 6 μm, 1 μm to 5 μm, or 2 μm to 4 μm. The D90 - D10 of the precursor compound having an average particle diameter of 7 μm or less is, for example, 1 μm to 10 μm, 1 μm to 9 μm, 1 μm to 8 μm, 1 μm to 7 μm, or 1 μm to 6 μm. Since the precursor compound has such a narrow particle size distribution, agglomeration of particles may be prevented in the preparation process of the precursor mixture.

The precursor compound including lithium includes a sulfide including lithium. For example, lithium sulfide is exemplified.

The precursor compound including an element selected from Group 2 elements and Group 11 elements in the Periodic Table includes sulfide including an element selected from Group 2 elements and Group 11 elements in the Periodic Table. For example, copper sulfide, silver sulfide, and sodium sulfide are exemplified.

The precursor compound including phosphorus (P) includes sulfide including phosphorus. For example, $P_2S_5$ is exemplified.

The precursor compound including a Group 17 element includes a lithium salt including a Group 17 element. For example, LiCl, LiF, LiBr, and LiI are exemplified.

The precursor mixture may further include a compound including a Group 1 element other than Li. The compound including a Group 1 element other than Li includes sulfide including a Group 1 element other than Li. For example, $Na_2S$ and $K_2S$ are exemplified.

The precursor mixture may further include a compound including $SO_n$ (1.5≤n≤5). The compound including $SO_n$ (1.5≤n≤5) includes a lithium salt including $SO_n$. For example, $Li_2S_4O_6$, $Li_2S_3O_6$, $Li_2S_2O_3$, $Li_2S_2O_4$, $Li_2S_2O_6$, $Li_2S_2O_6$, $Li_2S_2O_7$, $Li_2S_2O_8$, $Li_2SO_4$, and $Li_2SO_5$ are exemplified.

A precursor mixture is prepared by mixing the provided precursor compounds in an appropriate amount, for example, in a stoichiometric amount. The mixing of the precursor compounds may be performed by a dry or wet method. The mixing of the precursor compounds may be performed using a dry mixer or the like. Methods involving mechano-chemical reactions such as dry milling are excluded. When the precursor compounds are mixed by dry milling, aggregates are generated by agglomeration of precursor compound particles, and the average particle diameter of the solid ion conductor compound obtained by these aggregates in a subsequent process may excessively increase to 10 μm or more. The D90 - D10 of the precursor mixture is, for example, 1 μm to 10 μm, 1 to 9 μm, 1 μm to 8 μm, 1 μm to 7 μm, or 1 μm to 6 μm.

The precursor mixture in which the precursor compounds are mixed in a stoichiometric composition may be heat-treated in an inert atmosphere to prepare a solid ion conductor compound having an average particle diameter of 7 μm or less.

The heat treatment may be performed at 250 °C to 700°C, 300 °C to 700°C, 400°C to 650°C, 400°C to 600°C, 400°C to 550°C, or 400 °C to 500°C. The heat treatment time may be, for example, 1 hour to 36 hours, 2 hours to 30 hours, 4 hours to 24 hours, 10 hours to 24 hours, or 16 hours to 24 hours. The inert atmosphere is an atmosphere including an inert gas. Examples of the inert gas include, but are not limited to, nitrogen and argon. Any inert gas may be used as long as it is used in the art.

Hereinafter, the present disclosure will be described in detail with reference to Examples and Comparative Examples below. However, these Examples are intended to illustrate the present inventive idea, and the scope of the present inventive idea is not limited thereto.

(Preparation of solid ion conductor compound)

Example 1: Preparation of $Li_{5.72}Cu_{0.03}PS_{4.75}Cl_{1.25}$

$Li_2S$ as a lithium precursor, $P_2S_5$ as a phosphorus (P) precursor, LiCl as a chlorine precursor, and $Cu_2S$ as a copper precursor were provided respectively.

The above-described precursors were respectively prepared by wet pulverizing. 10 g of the precursors, 30 ml of a xylene solvent, and 100 g of zirconia ($ZrO_2$) balls were put into a 80 ml container, and wet ball-milling was carried out at a speed of 800 rpm for 2 hours. The xylene solvent was removed by performing vaccum drying at 120 °C for 36 hours, and the pulverized precursors were stored in an inert atmosphere. Agglomeration of pulverized particles was prevented by wet pulverizing. The D50, D90, and D10 values of the prepared precursor particles were measured, and results thereof are given in Table 1.

The respectively prepared precursor particles were mixed at a stoichiometric ratio so as to obtain a target composition $Li_{5.72}Cu_{0.03}PS_{4.75}Cl_{1.25}$ to prepare a precursor mixture.

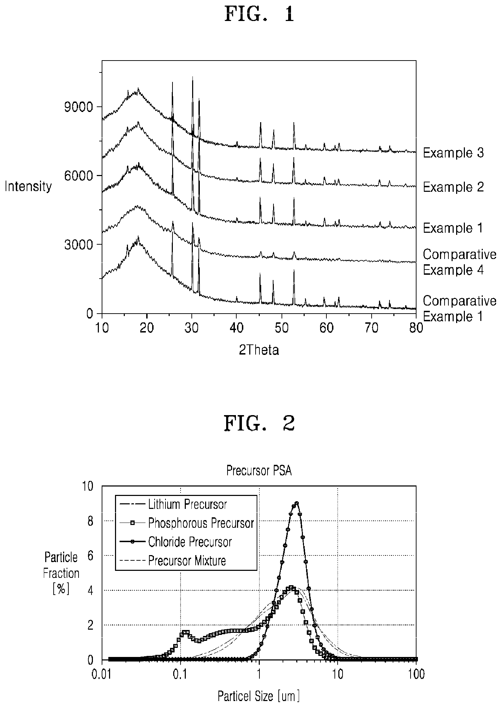

The mixing of the precursor particles was performed using a dry mixer. The agglomeration and mechanochemical reaction of the precursor particles were prevented by mixing the precursor particles using a dry mixer. In the mixing process using a dry mixer, the precursors were mixed based on 10 g of the target composition, and high-speed mixing was carried out at a speed of 25000 rpm for 5 minutes (repeated cycles of rotation for 10 seconds and stop for 10 seconds). The D50, D90, and D10 values of the prepared precursor mixture were measured, and results thereof are shown in Table 1 and FIG. 2.

The prepared precursor mixture powder was put into a carbon crucible, and the carbon crucible was sealed with an argon atmosphere using a quartz glass tube. The precursor mixture sealed with argon was heated from room temperature to 450 °C at a temperature increase rate of 1.0 °C/min using an electric furnace, heat-treated at 450 °C for 18 hours, and cooled to room temperature at temperature decrease rate of 1.0 °C/min to prepare a solid ion conductor compound. The composition of the prepared solid ion conductor compound is $Li_{5.72}Cu_{0.03}PS_{4.75}Cl_{1.25}$.

[Table 1]

|  | Lithium precursor $Li_2S$ [$\mu$m] | Phosphorus (P) precursor $P_2S_5$ [$\mu$m] | Chlorine precursor LiCl [$\mu$m] | Precursor mixture [$\mu$m] |
|---|---|---|---|---|
| D90 | 5.70 | 3.22 | 4.13 | 5.22 |
| D50 | 1.98 | 1.18 | 2.57 | 2.00 |
| D10 | 0.50 | 0.13 | 1.45 | 0.59 |
| D90 - D10 | 5.20 | 3.09 | 2.68 | 4.63 |

Example 2: Preparation of $Li_{5.72}Cu_{0.03}PS_{4.75}Cl_{1.15}Br_{0.1}$

A solid ion conductor compound was prepared in the same manner in Example 1, except that the stoichiometric mixing ratio of a start material was changed to obtain the target composition $Li_{5.72}Cu_{0.03}PS_{4.75}Cl_{1.15}Br_{0.1}$. The composition of the prepared solid ion conductor compound was $Li_{5.72}Cu_{0.03}PS_{4.75}Cl_{1.15}Br_{0.1}$. LiBr was additionally used as a bromine precursor.

Example 3: Preparation of $Li_{5.72}Cu_{0.03}PS_{4.725}Cl_{1.25}(SO_4)_{0.025}$

A solid ion conductor compound was prepared in the same manner in Example 1, except that the stoichiometric mixing ratio of a start material was changed to obtain the target composition $Li_{5.72}Cu_{0.03}PS_{4.725}Cl_{1.25}(SO_4)_{0.025}$. The composition of the prepared solid ion conductor compound was $Li_{5.72}Cu_{0.03}PS_{4.725}Cl_{1.25}(SO_4)_{0.025}$. $Li_2SO_4$ was additionally used as a $SO_4$ precursor.

Comparative Example 1: Preparation and solid phase synthesis of $Li_{5.72}Cu_{0.03}PS_{4.75}Cl_{1.25}$

Based on 10 g of the target composition of Example 1, 10 g of each precursor mixture and 100 g of zirconia ($ZrO_2$) balls were put into a 80 ml container, dry ball-milling was carried out at a speed of 100 rpm for 1 hour, and then dry ball-milling was carried out at a speed of 800 rpm for 30 minutes to prepare a milled precursor mixture. The prepared precursor mixture was heat-treated in the same manner as in Example 1 to prepare a solid ion conductor compound of a target composition.

Comparative Example 2: Preparation and solid phase synthesis of $Li_{5.72}Cu_{0.03}PS_{4.75}Cl_{1.15}Br_{0.1}$

A solid ion conductor compound of a target composition was prepared in the same manner as in Comparative Example 1, except that the target composition was changed to be the same as that in Example 2.

Comparative Example 3: Preparation and solid phase synthesis of $Li_{5.72}Cu_{0.03}PS_{4.725}Cl_{1.25}(SO_4)_{0.025}$

A solid ion conductor compound of a target composition was prepared in the same manner as in Comparative Example 1, except that the target composition was changed to be the same as that in Example 3.

Comparative Example 4: Preparation, solid phase synthesis and additional pulverization of $Li_{5.72}Cu_{0.03}PS_{4.75}Cl_{1.25}$

The solid ion conductor compound prepared in Comparative Example 1 was further pulverized to prepare a pulverized solid ion conductor compound.
The pulverizing of the solid ion conductor compound prepared in Comparative Example 1 was performed as follows.
The solid ion conductor compound powder prepared in Comparative Example 1, 90 g of zirconia $(ZrO_2I)$ balls, and 30 ml of xylene was put into a glove box of an Ar atmosphere, pulverized at a speed of 100 rpm for 24 hours using a planetary ball mill, and then dried in vacuum at 60 °C for 24 hours to prepare a pulverized solid ion conductor compound.

Comparative Example 5: Preparation, solid phase synthesis and additional pulverization of $Li_{5.72}Cu_{0.03}PS_{4.75}Cl_{1.15}Br_{0.1}$

The solid ion conductor compound prepared in Comparative Example 2 was additionally pulverized in the same manner as in Comparative Example 4 to prepare a solid ion conductor compound.

Comparative Example 6: Preparation, solid phase synthesis and additional pulverization of $Li_{5.72}Cu_{0.03}PS_{4.725}Cl_{1.25}(SO_4)_{0.025}$

The solid ion conductor compound prepared in Comparative Example 3 was additionally pulverized in the same manner as in Comparative Example 4 to prepare a solid ion conductor compound.

Example 4: Manufacture of all-solid secondary battery

(Preparation of cathode layer)

A large-particle cathode active material $LiNi_{0.8}Co_{0.15}Al_{0.05}O_2$ (NCA) (D50 = 14 $\mu$m), a small-particle cathode active material $LiNi_{0.8}Co_{0.15}Al_{0.05}O_2$ (NCA) (D50 = 5 $\mu$m), carbon nanofiber as a conducive material, polytetrafluoroethylene as a binder, and the solid ion conductor compound prepared in Example 1 were mixed, and xylene was added to prepare a cathode slurry. The prepared cathode slurry was molded into a sheet to prepare a cathode sheet. The mixing weight ratio of the large-particle cathode active material and the small-particle cathode active material was 3: 1. The mixing weight ratio of cathode active material: conductive material: binder: solid ion conductor compound was 84:0.2:1.0:14.8. The prepared cathode sheet was pressed onto a cathode current collector of aluminum foil having a thickness of 18 $\mu$m, put into a batch-type oil chamber, and subjected to a warm isotactic press (WIP) process at 90 °C for 1 hour by a pressure of 500 MPa to prepare a cathode layer.

(Preparation of solid electrolyte layer)

A solid electrolyte layer was prepared using the solid ion conductor compound (D50 = 2.34 $\mu$m) as solid electrolyte powder as follows.
The solid electrolyte prepared in Example 1 and an acrylic resin (manufactured by Xeon Corporation) as a binder were mixed at a weight ratio of 98.5:1.5 to prepare a mixture. Isobutyl isobutyrate (IBIB) as a solvent was added to the prepared mixture, and the mixture was stirred to prepare solid electrolyte slurry. The solid electrolyte slurry was applied onto a polyethylene nonwoven fabric, dried in air at 25 °C for 12 hours, and dried in vacuum at 70 °C for 2 hours. A sheet-shaped solid electrolyte layer formed on the polyethylene nonwoven fabric was prepared by the above process.

(Preparation of anode layer)

A nickel (Ni) foil (thickness: 10 $\mu$m) was prepared as an anode current collector. As an anode active material, Ag particles (average primary particle diameter of about 60 nm) and carbon black (average primary particle diameter of about 35 nm) were mixed at a weight ratio of 25:75 to prepare a mixed powder. The prepared mixed powder, a polyvinylidene fluoride (PVDF) binder (#9300, Kureha Corporation), and N-methylpyrrolidone (NMP) were put into a container, and stirred to prepare anode slurry. The content of the binder was 7 wt% based on dry weight of the anode layer. The prepared anode slurry was applied onto a nickel (Ni) foil using a blade coater, dried in air at 80 °C for 20 minutes, and dried in vacuum at 100 °C for 12 hours to prepare an anode layer.

(Manufacture of all-solid secondary battery)

The cathode layer, the solid electrolyte layer, and the anode layer was sequentially stacked, pressed, put into a batch-type oil chamber, and subjected to a warm isotactic press (WIP) process at 90 °C for 1 hour by a pressure of 500 MPa to manufacture an all-solid secondary battery having an area of 4cm$^2$.

Examples 5 and 6

All-solid secondary batteries were manufactured in the same manner as in Example 4, except that each of the solid electrolyte powders prepared in Examples 2 and 3 was used instead of the solid electrolyte powder prepared in Example 1.

Examples 7 to 12

All-solid secondary batteries were manufactured in the same manner as in Example 4, except that each of the solid electrolyte powders prepared in Examples 1 to 6 was used instead of the solid electrolyte powder prepared in Example 1.

Evaluation Example 1: Measurement of ion conductivity

Each of the solid ion conductor compound powders prepared in Examples 1 to 3 and Comparative Examples 1 to 6 was prepared, and then 200 mg of the powder was pressed by a pressure of4 ton/cm$^2$for 2 minutes to prepare a pellet specimen having a thickness of about 0.101mm and a diameter of about 13 mm. Indium (In) electrodes having a thickness of 50 $\mu$m and a diameter of 13 mm were placed on both surfaces of the prepared specimen to prepare a symmetry cell. The preparation of the symmetry cell was performed in a gloverbox in an Ar atmosphere.
For the specimen in which indium electrodes were placed on both surfaces thereof, the impedance of the pellet was measured by a 2-probe method using an impedance analyzer (Material Mates 7260 impedance analyzer). The frequency range was 0.1 Hz to 1 MHz, and the amplitude voltage was 10 mV. The impedance thereof was measured at °C in an Ar atmosphere. The resistance value was calculated from the arc of the Nyquist plot for the impedance measurement result, and the ion conductivity was calculated in consideration of the area and thickness of the specimen. The measurement results are given in Table 2.

Evaluation Example 2: Measurement of particle diameter

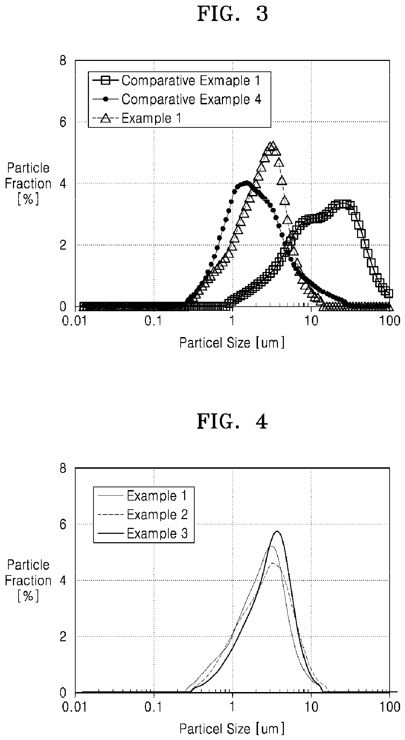

D50 and D90-D10 values of the solid ion conductor compound particles prepared in Examples 1 to 3 and Comparative Examples 1 to 6 were measured using a particle size analyzer (PSA). Xylene was used as a solvent for measurement.
The median particle diameter, which is a D50 value of the prepared solid ion conductor compound particles, was taken as an average particle diameter.
The measurement results are shown in Table 2 and FIGS. 3 and 4.

[Table 2]

|  | Ion conductivity [mS/cm] | D50 [$\mu$m] | D90 - D10 [$\mu$m] |
|---|---|---|---|
| Example 1 | 4.1 | 2.34 | 4.2 |
| Example 2 | 4.14 | 2.62 | 5.4 |
| Example 3 | 4.3 | 2.91 | 4.85 |
| Comparative Example 1 | 3.5 | 10 | 44 |
| Comparative Example 2 | 4.3 | 14.4 | 40 |
| Comparative Example 3 | 3.55 | 11 | 42 |
| Comparative Example 4 | 1.4 | 1.3 | 3.25 |
| Comparative Example 5 | 1.23 | 1.7 | 5.36 |

(continued)

|  | Ion conductivity [mS/cm] | D50 [$\mu$m] | D90 - D10 [$\mu$m] |
|---|---|---|---|
| Comparative Example 6 | 1.57 | 1.4 | 6.3 |

As shown in Table 2 and FIGS. 3 and 4, the solid ion conductor compounds of Examples 1 to 3 have an ion conductivity of 3 mS/cm or more and an average particle diameter (D50) of 7 $\mu$m or less.

In contrast, the solid ion conductor compounds of Comparative Examples 1 to 3 have an ion conductivity of 3 mS/cm or more, but have an average particle diameter (D50) of 10 $\mu$m or more.

The solid ion conductor compounds of Comparative Examples 4 to 6 have an average particle diameter (D50) of 7 $\mu$m or less, but have an ion conductivity of less than 2 mS/cm.

The solid ion conductor compounds of Examples 1 to 3 provide both excellent ion conductivity and reduced average particle diameter, whereas the solid ion conductor compounds of Comparative Examples 1 to 6provide insufficient ion conductivity and increased average particle diameter.

Evaluation Example 3: X-ray diffraction experiment

For the solid ion conductor compound powder prepared in Examples 1 to 3 and Comparative Examples 1 and 4, powder XRD spectrums were measured, and some of the results are illustrated in FIG. 1. Cu K$\alpha$ radiation was used for XRD spectrum measurement. It was found that each of the solid ion conductor compounds of Examples 1 to 5 has a structure belonging to a F-23M space group and a cubic crystal system, and is an argyrodite type sulfide having a argyrodite type crystal structure.

In the solid ion conductor compounds of Examples 1 to 3 and Comparative Example 1, in an XRD spectrum using CuK$\alpha$ radiation, peak intensity (Ia) of a crystalline peak at diffraction angle of $2\theta=30.01\pm1.0°$was greater than peak intensity (Ib) of a broad peak at diffraction angle of $2\theta=19.0°\pm3.0°$. The reason of this was determined that the solid ion conductor compounds of Examples 1 to 3 and Comparative Example 1 prepared by heat treatment were directly used, and thus the peak intensity (I) of a crystalline peak at diffraction angle of $2\theta=30.01\pm1.0°$was maintained high.

In contrast, In the solid ion conductor compound of Comparative Example 4, in the XRD spectrum using CuK$\alpha$ radiation, peak intensity (Ia) of a crystalline peak at diffraction angle of $2\theta=30.01\pm1.0°$was lower than peak intensity (Ib) of a broad peak at diffraction angle of $2\theta=19.0°\pm3.0°$. The reason of this was determined that the solid ion conductor compound of Comparative Example 4 was subjected to a pulverizing process for reducing the particle diameter of the solid ion conductor compound prepared by heat treatment, and thus the peak intensity (Ia) of a crystalline peak at diffraction angle of $2\theta=30.01\pm1.0°$was reduced by an increase in content of amorphous phase during the pulverizing process.

Evaluation Example 4: Charge-Discharge Test

Charge and discharge characteristics of each of the all-solid secondary batteries manufactured in Examples 4 to 6 and Comparative Examples 7 to 12 were evaluated by the following charge-discharge test. The charge-discharge test was performed by putting the all-solid secondary battery into a chamber at 45 °C.

In the first cycle, the secondary battery was charged with a constant current of 0.1 C until the battery voltage reached 4.25 V, and was charged with a constant voltage of 4.25 V up to a current of 0.05C. Subsequently, the secondary battery was discharged with a constant current of 0.1C until the battery voltage reached 2.5 V.

In the second cycle, the secondary battery was charged with a constant current of 0.1 C until the battery voltage reached 4.25 V, and was charged with a constant voltage of 4.25 V up to a current of 0.05C. Subsequently, the secondary battery was discharged with a constant current of 0.33 C until the battery voltage reached 2.5 V.

In the third cycle, the secondary battery was charged with a constant current of 0.1 C until the battery voltage reached 4.25 V, and was charged with a constant voltage of 4.25 V up to a current of 0.05C. Subsequently, the secondary battery was discharged with a constant current of 1.0 C until the battery voltage reached 2.5 V.

A 10-minute break was given after charging and discharging steps for each cycle. Some of measurement results are given in Table 3.

The charging capacity, discharging capacity and charge-discharge efficiency of each of the all-solid secondary batteries of Examples 4 to 6 and Comparative Example 10 for each cycle are given in Table 3.

The charge-discharge efficiency is calculated from Equation 1.

< Equation 1>

Charge-discharge efficiency (%) = [discharging capacity / charging capacity] x 100

[Table 3]

|  | Charging condition [C rate] | Charging capacity [mAh/g] | Discharging capacity [mAh/g] | Charging-discharging efficiency |
|---|---|---|---|---|
| Example 4 | 0.1C | 230.5 | 191.9 | 83.3 |
| Example 4 | 0.33C | 191.3 | 179.6 | 93.9 |
| Example 4 | 1.0C | 179.2 | 167.6 | 93.5 |
| Example 5 | 0.1C | 225.4 | 197.7 | 87.7 |
| Example 5 | 0.33C | 195.5 | 181.7 | 93.0 |
| Example 5 | 1.0C | 179.7 | 164.8 | 91.7 |
| Example 6 | 0.1C | 231.1 | 203.1 | 87.9 |
| Example 6 | 0.33C | 201.3 | 188.1 | 93.5 |
| Example 6 | 1.0C | 186.2 | 172.4 | 92.6 |
| Comparative Example 10 | 0.1C | 231.0 | 190.8 | 82.6 |
| Comparative Example 10 | 0.33C | 190.2 | 177.7 | 93.4 |
| Comparative Example 10 | 1.0C | 177.3 | 164.1 | 92.6 |

As given in Table 3, the discharging capacity of the all-solid secondary batteries of Examples 4 to 6 was improved as compared with the discharging capacity of the all-solid secondary battery of Comparative Example 10, and the charge-discharge efficiency thereof was also improved under most conditions.

This decrease in discharge capacity was determined because the ion conductivity of the solid ion conductor compounds included in the all-solid secondary batteries of Examples 4 to 6 increased, and thus the internal resistance of the all-solid secondary batteries of Examples 4 to 6 decreased as compared with that of the all-solid secondary battery of Comparative Example 10.

Evaluation Example 5: Charge-discharge test, lifetime characteristic evaluation

Lifetime characteristics were evaluated for the all-solid secondary batteries of Examples 4 to 6 and Comparative Example 10 in which the rate characteristics evaluation of Evaluation Example 4 was completed. The charge-discharge test was performed by putting the all-solid secondary battery into a chamber at 45 °C.

The secondary battery was charged with a constant current of 0.33 C until the battery voltage reached 4.25 V, and was charged with a constant voltage of 4.25 V up to a current of 0.1 C. Subsequently, the secondary battery was discharged with a constant current of 0.33 C until the battery voltage reached 2.5 V. This charge-discharge cycle was performed 50 times. A 10-minute break was given after charging and discharging steps for each cycle.

The capacity retention rates of the all-solid secondary batteries of Examples 4 to 6 and Comparative Example 10 are shown in Table 4 and FIG. 5. The capacity retention rate is calculated from Equation 2.

< Equation 2>

Capacity retention rate (%) = [discharging capacity at 50$^{th}$ cycle / discharging capacity at 1$^{st}$ cycle] x 100

[Table 4]

|  | Capacity retention rate [%] |
| --- | --- |
| Example 4 | 93 |
| Example 5 | 97 |
| Example 6 | 95 |
| Comparative Example 10 | 92 |

As shown in Table 4 and FIG. 5, the high-temperature lifetime characteristics of the all-solid secondary batteries of Examples 4 to 6 were improved as compared with that of the all-solid secondary battery of Comparative Example 10.

Further, as shown in FIG. 5, the discharging capacity of each of the all-solid secondary batteries of Examples 4 to 6 was improved as compared with that of the all-solid secondary battery of Comparative Example 10.

According to an aspect of an embodiment, an electrochemical cell having improved cycle characteristics is provided by including a solid ion conductor compound having improved lithium ion conductivity and reduced average particle diameter.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

**Claims**

1. A solid ion conductor compound comprising:

    a compound represented by Formula 1,
    wherein the compound has an argyrodite type crystal structure,
    has an ion conductivity of 3 mS/cm or more at 25 °C, and
    has an average particle diameter of 0.1 $\mu$m to 7 $\mu$m,

    <Formula 1>        $Li_aM1_xPS_yM2_zM3_w$

    wherein, in Formula 1,

    M1 is at least one metal element selected from Group 1 to 15 elements, except for Li, in the Periodic Table,
    M2 is at least one element selected from Group 17 elements in the Periodic Table,
    M3 is$SO_n$, and
    $4 \leq a \leq 8$, $0 \leq x < 1$, $3 \leq y \leq 7$, $0 < z \leq 2$, $0 \leq w < 2$, $1.5 \leq n \leq 5$, and $0 < x+w < 3$.

2. The solid ion conductor compound of claim 1, wherein M1 includes Na, K, Cu, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof.

3. The solid ion conductor compound of claim 1, wherein M2 includes F, Cl, Br, I, or a combination thereof, and the $SO_n$ of M3 is $S_4O_6$, $S_3O_6$, $S_2O_3$, $S_2O_4$, $S_2O_6$, $S_2O_6$, $S_2O_7$, $S_2O_6$, $SO_4$, $SO_5$, or a combination thereof.

4. The solid ion conductor compound of claim 1, wherein the compound represented by Formula 1 is represented by one of Formulas 1a to 1c:

<Formula 1a> $Li_aM1_xPS_yM2_z$

wherein, in Formula 1a,

M1 is at least one metal element selected from Group 1 to 15 elements, except for Li, in the Periodic Table,
M2 is at least one element selected from Group 17 elements in the Periodic Table, and
$4 \leq a \leq 8$, $0 < x < 1$, $3 \leq y \leq 7$, and $0 < z \leq 2$,

<Formula 1b> $Li_aM1_xPS_yM2_zM3_w$

wherein, in Formula 1b,

M1 is at least one metal element selected from Group 1 to 15 elements, except for Li, in the Periodic Table,
M2 is at least one element selected from Group 17 elements in the Periodic Table,
M3 is $SO_n$, and

$4 \leq a \leq 8$, $0 < x < 1$, $3 \leq y \leq 7$, $0 < z \leq 2$, $0 < w < 2$, and $1.5 \leq n \leq 5$,

<Formula 1c> $Li_aPS_yM2_zM3_w$

wherein, in Formula 1c,

M2 is at least one element selected from Group 17 elements in the Periodic Table,
M3 is $SO_n$, and
$4 \leq a \leq 8$, $3 \leq y \leq 7$, $0 < z \leq 2$, $0 < w < 2$, and $1.5 \leq n \leq 5$.

5. The solid ion conductor compound of claim 1, wherein the compound represented by Formula 1 is represented by Formula 2:

<Formula 2> $Li_{7-m \times v-z}M1_vPS_{6-z-w}M2_zM3_w$

wherein, in Formula 2,

M1 is at least one metal element selected from Group 1 to 15 elements, except for Li, in the Periodic Table, m is an oxidation number of M1,
M2 is at least one element selected from Group 17 elements in the Periodic Table,
M3 is $SO_n$, and
$0 \leq v < 1$, $0 < z \leq 2$, $0 \leq w < 2$, $1.5 \leq n \leq 5$, $1 \leq m \leq 2$, and $0 < v+w < 3$.

6. The solid ion conductor compound of claim 1, wherein the compound represented by Formula 1 is represented by one of Formulas 2a to 2c:

<Formula 2a> $Li_{7-m \times v-z}M1_vPS_{6-z}M2_z$

wherein, in Formula 2a,

M1 is at least one metal element selected from Group 1 to 15 elements, except for Li, in the Periodic Table, m is an oxidation number of M1,
M2 is at least one element selected from Group 17 elements in the Periodic Table, and
$0 < v < 1$, $0 < z \leq 2$, and $1 \leq m \leq 2$,

<Formula 2b> $Li_{7-m \times v-z}M1_vPS_{6-z-w}M2_zM3_w$

wherein, in Formula 2b,

M1 is at least one metal element selected from Group 1 to 15 elements, except for Li, in the Periodic Table, m is an oxidation number of M1,

M2 is at least one element selected from Group 17 elements in the Periodic Table,
M3 is $SO_n$, and

$0 < v < 1$, $0 < z \leq 2$, $0 < w < 2$, $1.5 \leq n \leq 5$, and $1 \leq m \leq 2$

<Formula 2c> $Li_{7-z}PS_{6-z-w}M2_z M3_w$

wherein, in Formula 2c,

M2 is at least one element selected from Group 17 elements in the Periodic Table,
M3 is $SO_n$, and
$0 < z \leq 2$, $0 < w < 2$, $1.5 \leq n \leq 5$, and $1 \leq m \leq 2$.

7. The solid ion conductor compound of claim 1, wherein the compound represented by Formula 1 is represented by Formula 3:

<Formula 3> $Li_{7-m \times v-z}M4_v PS_{6-z}M5_{z1}M6_{z2}$

wherein, in Formula 3,

M4 is Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m is an oxidation number of M4, M5 and M6 are each independently F, Cl, Br, or I, and
$0 < v < 0.7$, $0 < z1 < 2$, $0 \leq z2 < 1$, $0 < z < 2$, $z = z1 + z2$, and $1 \leq m \leq 2$.

8. The solid ion conductor compound of claim 1, wherein the compound represented by Formula 1 is represented by one of Formulas 3a to 3e:

<Formula 3a> $Li_{7-v-z}Na_v PS_{6-z}M5_{z1}M6_{z2}$

<Formula 3b> $Li_{7-v-z}K_v PS_{6-z}M5_{z1}M6_{z2}$

<Formula 3c> $Li_{7-v-z}Cu_v PS_{6-z}M5_{z1}M6_{z2}$

<Formula 3d> $Li_{7-v-z}Mg_v PS_{6-z}M5_{z1}M6_{z2}$

<Formula 3e> $Li_{7-v-z}Ag_v PS_{6-z}M5_{z1}M6_{z2}$

wherein, in Formulas 3a to 3e,

M5 and M6 are each independently F, Cl, Br, or I, and
$0 < v < 0.7$, $0 < z1 < 2$, $0 \leq z2 < 1$, $0 < z < 2$, and $z = z1 + z2$.

9. The solid ion conductor compound of claim 1, wherein the compound represented by Formula 1 is represented by one of the following Formulas:

$Li_{7-v-z}Na_v PS_{6-z}F_{z1}$, $Li_{7-v-z}Na_v PS_{6-z}Cl_{z1}$, $Li_{7-v-z}Na_v PS_{6-z}Br_{z1}$, $Li_{7-v-z}Na_v PS_{6-z}I_{z1}$,

$Li_{7-v-z}Na_v PS_{6-z}F_{z1}Cl_{z2}$, $Li_{7-v-z}Na_v PS_{6-z}F_{z1}Br_{z2}$, $Li_{7-v-z}Na_v PS_{6-z}F_{z1}I_{z2}$, $Li_{7-v-z}Na_v PS_{6-z}Cl_{z1}Br_{z2}$, $Li_{7-v-z}Na_v PS_{6-z}Cl_{z1}I_{z2}$, $Li_{7-v-z}Na_v PS_{6-z}Cl_{z1}F_{z2}$, $Li_{7-v-z}Na_v PS_{6-z}Br_{z1}I_{z2}$, $Li_{7-v-z}Na_v PS_{6-z}Br_{z1}F_{z2}$, $Li_{7-v-z}Na_v PS_{6-z}Br_{z1}Cl_{z2}$, $Li_{7-v-z}Na_v PS_{6-z}I_{z1}F_{z2}$, $Li_{7-v-z}Na_v PS_{6-z}I_{z1}Cl_{z2}$, $Li_{7-v-z}Na_v PS_{6-z}I_{z1}Br_{z2}$,

$Li_{7-v-z}K_v PS_{6-z}F_{z1}$, $Li_{7-v-z}K_v PS_{6-z}Cl_{z1}$, $Li_{7-v-z}K_v PS_{6-z}Br_{z1}$, $Li_{7-v-z}K_v PS_{6-z}I_{z1}$,

$Li_{7-v-z}K_v PS_{6-z}F_{z1}Cl_{z2}$, $Li_{7-v-z}K_v PS_{6-z}F_{z1}Br_{z2}$, $Li_{7-v-z}K_v PS_{6-z}F_{z1}I_{z2}$, $Li_{7-v-z}K_v PS_{6-z}Cl_{z1}Br_{z2}$, $Li_{7-v-z}K_v PS_{6-z}Cl_{z1}I_{z2}$, $Li_{7-v-z}K_v PS_{6-z}Cl_{z1}F_{z2}$, $Li_{7-v-z}K_v PS_{6-z}Br_{z1}I_{z2}$, $Li_{7-v-z}K_v PS_{6-z}Br_{z1}F_{z2}$, $Li_{7-v-z}K_v PS_{6-z}Br_{z1}Cl_{z2}$, $Li_{7-v-z}K_v PS_{6-z}I_{z1}F_{z2}$, $Li_{7-v-z}K_v PS_{6-z}I_{z1}Cl_{z2}$, $Li_{7-v-z}K_v PS_{6-z}I_{z1}Br_{z2}$,

$Li_{7-v-z}Cu_v PS_{6-z}F_{z1}$, $Li_{7-v-z}Cu_v PS_{6-z}Cl_{z1}$, $Li_{7-v-z}Cu_v PS_{6-z}Br_{z1}$, $Li_{7-v-z}Cu_v PS_{6-z}I_{z1}$,

$Li_{7-v-z}Cu_vPS_{6-z}F_{z1}Cl_{z2}$, $Li_{7-v-z}Cu_vPS_{6-z}F_{z1}Br_{z2}$, $Li_{7-v-z}CU_vPS_{6-z}F_{z1}I_{z2}$, $Li_{7-v-z}CU_vPS_{6-z}Cl_{z1}Br_{z2}$, $Li_{7-v-z}CU_vPS_{6-z}Cl_{z1}I_{z2}$, $Li_{7-v-z}Cu_vPS_{6-z}Cl_{z1}F_{z2}$, $Li_{7-v-z}Cu_vPS_{6-z}Br_{z1}I_{z2}$, $Li_{7-v-z}CU_vPS_{6-z}Br_{z1}F_{z2}$, $Li_{7-v-z}Cu_vPS_{6-z}Br_{z1}Cl_{z2}$, $Li_{7-v-z}Cu_vPS_{6-z}I_{z1}F_{z2}$, $Li_{7-v-z}Cu_vPS_{6-z}I_{z1}Cl_{z2}$, $Li7_{-v-z}CU_vPS_{6-z}I_{z1}Br_{z2}$,

$Li_{7-v-z}Mg_vPS_{6-z}F_{z1}$, $Li_{7-v-z}Mg_vPS_{6-z}Cl_{z1}$, $Li_{7-v-z}Mg_vPS_{6-z}Br_{z1}$, $Li_{7-v-z}Mg_vPS_{6-z}I_{z1}$,

$Li_{7-v-z}Mg_vPS_{6-z}F_{z1}Cl_{z2}$, $Li_{7-v-z}Mg_vPS_{6-z}F_{z1}Br_{z2}$, $Li_{7-v-z}Mg_vPS_{6-z}F_{z1}I_{z2}$, $Li_{7-v-z}Mg_vPS_{6-z}Cl_{z1}Br_{z2}$, $Li_{7-v-z}Mg_vPS_{6-z}Cl_{z1}I_{z2}$, $Li_{7-v-z}Mg_vPS_{6-z}Cl_{z1}F_{z2}$, $Li_{7-v-z}Mg_vPS_{6-z}Br_{z1}I_{z2}$, $Li_{7-v-z}Mg_vPS_{6-z}Br_{z1}F_{z2}$, $Li_{7-v-z}Mg_vPS_{6-z}Br_{z1}Cl_{z2}$, $Li_{7-v-z}Mg_vPS_{6-z}I_{z1}F_{z2}$, $Li_{7-v-z}Mg_vPS_{6-z}I_{z1}Cl_{z2}$, $Li_{7-v-z}Mg_vPS_{6-z}I_{z1}Br_{z2}$,

$Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$,

$Li_{7-v-z}Ag_vPS_{6-z}F_{z1}Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, and $Li_{7-v-z}Ag_vPS_{6-z}I_{z1}Br_{z2}$,

wherein, in the above Formulas, $0<v<0.7$, $0<z1<2$, $0 \leq z2<1$, $0<z<2$, and $z=z1+z2$.

10. The solid ion conductor compound of claim 1, wherein the compound represented by Formula 1 is represented by Formula 4:

<Formula 4> $Li_{7-m \times v-z}M4_vPS_{6-z-w}M7_z(SO_4)_w$

wherein, in Formula 4,

M4 is Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m is an oxidation number of M4,
M7 is F, Cl, Br, or I, and
$0<v<1$, $0<z \leq 2$, $0<w<1$, and $1 \leq m \leq 2$.

11. The solid ion conductor compound of claim 1, wherein the compound represented by Formula 1 is represented by one of Formulas 4a to 4e:

<Formula 4a> $Li_{7-v-z}Na_vPS_{6-z-w}M7_z(SO_4)_w$

<Formula 4b> $Li_{7-v-z}K_vPS_{6-z-w}M7_z(SO_4)_w$

<Formula 4c> $Li_{7-v-z}Cu_vPS_{6-z-w}M7_z(SO_4)_w$

<Formula 4d> $Li_{7-v-z}Mg_vPS_{6-z-w}M7_z(SO_4)_w$

<Formula 4e> $Li_{7-v-z}Ag_vPS_{6-z-w}M7_z(SO_4)_w$

wherein, in Formulas 4a to 4e,

M7 is F, Cl, Br, or I, and
$0<v<0.7$, $0<z \leq 2$, and $0<w<0.2$.

12. The solid ion conductor compound of claim 1, wherein the compound represented by Formula 1 is represented by one of the following Formulas:

$Li_{7-v-z}Na_vPS_{6-z-w}F_z(SO_4)_w$, $Li_{7-v-z}Na_vPS_{6-z-w}Cl_z(SO_4)_w$, $Li_{7-v-z}Na_vPS_{6-z-w}Br_z(SO_4)_w$, $Li_{7-v-z}Na_vPS_{6-z-w}I_z(SO_4)_w$,

$Li_{7-v-z}K_vPS_{6-z-w}F_z(SO_4)_w$, $Li_{7-v-z}K_vPS_{6-z-w}Cl_z(SO_4)_w$, $Li_{7-v-z}K_vPS_{6-z-w}Br_z(SO_4)_w$, $Li_{7-v-z}K_vPS_{6-z-w}I_z(SO_4)_w$,

$Li_{7-v-z}Cu_vPS_{6-z-w}F_z(SO_4)_w$,  $Li_{7-v-z}Cu_vPS_{6-z-w}Cl_z(SO_4)_w$,  $Li_{7-v-z}Cu_vPS_{6-z-w}Br_z(SO_4)_w$, $Li_{7-v-z}Cu_vPS_{6-z-w}I_z(SO_4)_w$,

$Li_{7-v-z}Mg_vPS_{6-z-w}F_z(SO_4)_w$,  $Li_{7-v-z}Mg_vPS_{6-z-w}Cl_z(SO_4)_w$,  $Li_{7-v-z}Mg_vPS_{6-z-w}Br_z(SO_4)_w$, $Li_{7-v-z}Mg_vPS_{6-z-w}I_z(SO_4)_w$,

$Li_{7-v-z}Ag_vPS_{6-z-w}F_z(SO_4)_w$,  $Li_{7-v-z}Ag_vPS_{6-z-w}Cl_z(SO_4)_w$,  $Li_{7-v-z}Ag_vPS_{6-z-w}Br_z(SO_4)_w$, and $Li_{7-v-z}Ag_vPS_{6-z-w}I_z(SO_4)_w$,

wherein, in the above Formulas,
$0<v<0.7$, $0<z\leq2$, and $0<w<0.2$.

13. The solid ion conductor compound of claim 1, wherein the compound represented by Formula 1 is represented by Formula 5:

<Formula 5>     $Li_{7-z}PS_{6-z-w}M7_z(SO_4)_w$

wherein, in Formula 5,

M7 is F, Cl, Br, or I, and
$0<z\leq2$ and $0<w<2$.

14. The solid ion conductor compound of claim 1, wherein the compound represented by Formula 1 is represented by the following Formulas:

$Li_{7-z}PS_{6-z-w}F_z(SO_4)_w$, $Li_{7-z}PS_{6-z-w}Cl_z(SO_4)_w$, $Li_{7-z}PS_{6-z-w}Br_z(SO_4)_w$, and $Li_{7-z}PS_{6-z-w}I_z(SO_4)_w$,

wherein, in the above Formulas,
$0<z\leq2$ and $0<w<2$.

15. The solid ion conductor compound of claim 1, wherein, in an XRD spectrum using CuK$\alpha$ radiation, a peak intensity (Ia) of a crystalline peak at a diffraction angle of $2\theta=30.01\pm1.0°$ is greater than a peak intensity (Ib) of a broad peak at a diffraction angle of $2\theta=19.0°\pm3.0°$.

16. A solid electrolyte comprising: the solid ion conductor compound of any one of claims 1 to 15.

17. An electrochemical cell comprising:

a cathode layer including a cathode active material layer;
an anode layer including an anode active material layer; and
an electrolyte layer between the cathode layer and the anode layer,
wherein at least one of the cathode active material layer and the electrolyte layer includes the solid ion conductor compound of any one of claims 1 to 15.

18. The electrochemical cell of claim 17, wherein the electrochemical cell is an all-solid secondary battery,

the solid ion conductor compound included in the cathode active material layer has an average particle diameter of 0.5 $\mu$m to 5 $\mu$m, and
the solid ion conductor compound included in the electrolyte layer has an average particle diameter of 1 $\mu$m to 7 $\mu$m.

19. A method of preparing a solid ion conductor compound, the method comprising:

separately preparing different kinds of precursor compounds having an average particle diameter of 7 $\mu$m or less;
mixing the different kinds of precursor compounds with each other to prepare a mixture; and
heat-treating the mixture to prepare a solid ion conductor compound,
wherein the solid ion conductor compound has an average particle diameter of 7 $\mu$m or less.

**20.** The method of claim 19, wherein the precursor compound particles have a D90 - D10 value of 10 $\mu$m or less.

FIG. 1

FIG. 2

FIG. 3

FIG. 4

## FIG. 5

## FIG. 6

FIG. 7

FIG. 8

## INTERNATIONAL SEARCH REPORT

| International application No. |
|---|
| **PCT/KR2021/012904** |

**A.    CLASSIFICATION OF SUBJECT MATTER**

**H01M 10/0562**(2010.01)i; **H01B 1/06**(2006.01)i; **C01B 25/14**(2006.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 10/0562(2010.01); H01B 1/10(2006.01); H01M 10/04(2006.01); H01M 10/05(2010.01); H01M 10/052(2010.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체이온전도체(solid ion conductor), 아지로다이트형(argyrodite type), 이온전도도(ion conductivity)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2017-0077014 A (SAMSUNG ELECTRONICS CO., LTD.) 05 July 2017 (2017-07-05) See claims 1, 5, 7, 10, 11 and 17-20; paragraphs [0017], [0018], [0024], [0037], [0039], [0046], [0047], [0049], [0058] and [0066]; and examples 1 and 3. | 1-9,15-20 |
| A | | 10-14 |
| A | KR 10-2014-0096273 A (IDEMITSU KOSAN CO., LTD.) 05 August 2014 (2014-08-05) See claims 1, 8, 22 and 33; and paragraphs [0175]-[0185]. | 1-20 |
| A | WO 2018-218057 A2 (SION POWER CORPORATION et al.) 29 November 2018 (2018-11-29) See claims 1-3, 7, 9, 12 and 44-46. | 1-20 |
| A | US 2019-0198916 A1 (HYUNDAI MOTOR COMPANY et al.) 27 June 2019 (2019-06-27) See claims 1-12. | 1-20 |
| A | JP 2020-102460 A (IDEMITSU KOSAN CO., LTD.) 02 July 2020 (2020-07-02) See entire document. | 1-20 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 December 2021** | **23 December 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/012904**

| Patent document cited in search report | | | Publication date (day/month/year) | Patent family member(s) | | | Publication date (day/month/year) |
|---|---|---|---|---|---|---|---|
| KR | 10-2017-0077014 | A | 05 July 2017 | JP | 2017-117753 | A | 29 June 2017 |
| | | | | JP | 6-881892 | B2 | 02 June 2021 |
| | | | | US | 2017-0187066 | A1 | 29 June 2017 |
| KR | 10-2014-0096273 | A | 05 August 2014 | AU | 2012-333924 | A1 | 22 May 2014 |
| | | | | CA | 2854596 | A1 | 16 May 2013 |
| | | | | CA | 2854596 | C | 31 December 2019 |
| | | | | CN | 104025363 | A | 03 September 2014 |
| | | | | CN | 104025363 | B | 25 August 2017 |
| | | | | EP | 2779298 | A1 | 17 September 2014 |
| | | | | EP | 2779298 | A4 | 30 September 2015 |
| | | | | EP | 2779298 | B1 | 11 April 2018 |
| | | | | EP | 3361545 | A1 | 15 August 2018 |
| | | | | EP | 3361545 | B1 | 24 June 2020 |
| | | | | JP | 2013-201110 | A | 03 October 2013 |
| | | | | JP | 2018-049834 | A | 29 March 2018 |
| | | | | JP | 6234665 | B2 | 22 November 2017 |
| | | | | JP | 6518745 | B2 | 22 May 2019 |
| | | | | KR | 10-1973827 | B1 | 29 April 2019 |
| | | | | TW | 201336149 | A | 01 September 2013 |
| | | | | TW | I586021 | B | 01 June 2017 |
| | | | | US | 2014-0302382 | A1 | 09 October 2014 |
| | | | | US | 2017-0194662 | A1 | 06 July 2017 |
| | | | | US | 9620811 | B2 | 11 April 2017 |
| | | | | US | 9806373 | B2 | 31 October 2017 |
| | | | | WO | 2013-069243 | A1 | 16 May 2013 |
| WO | 2018-218057 | A2 | 29 November 2018 | CN | 110785885 | A | 11 February 2020 |
| | | | | JP | 2020-522091 | A | 27 July 2020 |
| | | | | KR | 10-2020-0000849 | A | 03 January 2020 |
| | | | | US | 2018-0351148 | A1 | 06 December 2018 |
| | | | | WO | 2018-218057 | A3 | 10 January 2019 |
| US | 2019-0198916 | A1 | 27 June 2019 | CN | 109980273 | A | 05 July 2019 |
| | | | | KR | 10-2019-0079132 | A | 05 July 2019 |
| | | | | US | 10818970 | B2 | 27 October 2020 |
| JP | 2020-102460 | A | 02 July 2020 | CN | 109690696 | A | 26 April 2019 |
| | | | | CN | 109690696 | B | 20 October 2020 |
| | | | | CN | 109690697 | A | 26 April 2019 |
| | | | | CN | 109690697 | B | 05 January 2021 |
| | | | | CN | 112652810 | A | 13 April 2021 |
| | | | | EP | 3511948 | A1 | 17 July 2019 |
| | | | | EP | 3511948 | A4 | 18 March 2020 |
| | | | | EP | 3511948 | B1 | 12 May 2021 |
| | | | | EP | 3511949 | A1 | 17 July 2019 |
| | | | | EP | 3511949 | A4 | 18 March 2020 |
| | | | | EP | 3511949 | B1 | 19 May 2021 |
| | | | | EP | 3905278 | A1 | 03 November 2021 |
| | | | | JP | 2021-122029 | A | 26 August 2021 |
| | | | | JP | 6679736 | B2 | 15 April 2020 |
| | | | | JP | 6679737 | B2 | 15 April 2020 |
| | | | | KR | 10-2019-0051962 | A | 15 May 2019 |
| | | | | KR | 10-2019-0058467 | A | 29 May 2019 |

Form PCT/ISA/210 (patent family annex) (July 2019)

INTERNATIONAL SEARCH REPORT
Information on patent family members

International application No.

**PCT/KR2021/012904**

| Patent document cited in search report | Publication date (day/month/year) | Patent family member(s) | | Publication date (day/month/year) |
|---|---|---|---|---|
| | | KR 10-2021-0044905 | A | 23 April 2021 |
| | | KR 10-2242073 | B1 | 19 April 2021 |
| | | KR 10-2320308 | B1 | 01 November 2021 |
| | | TW 201817074 | A | 01 May 2018 |
| | | TW 201817075 | A | 01 May 2018 |
| | | US 10374253 | B2 | 06 August 2019 |
| | | US 10483587 | B2 | 19 November 2019 |
| | | US 10879561 | B2 | 29 December 2020 |
| | | US 2019-0140313 | A1 | 09 May 2019 |
| | | US 2019-0140314 | A1 | 09 May 2019 |
| | | US 2019-0305371 | A1 | 03 October 2019 |
| | | US 2021-0075057 | A1 | 11 March 2021 |
| | | WO 2018-047565 | A1 | 15 March 2018 |
| | | WO 2018-047566 | A1 | 15 March 2018 |

Form PCT/ISA/210 (patent family annex) (July 2019)